# EUROPÄISCHE PATENTSCHRIFT

(11) **EP 2 653 300 B1**
(45) Veröffentlichungstag und Bekanntmachung des Hinweises auf die Patenterteilung: **22.11.2017**
(21) Anmeldenummer: 13163671.4
(22) Anmeldetag: 15.04.2013
(51) Int. Cl.: B31D 1/02, B32B 37/00, B32B 43/00, B65C 9/18, B65C 9/46, G09F 3/10

(54) **Verfahren zum Ausstatten von Produkten mit Einzellaminaten**
Method for the labelling of products
Procédé d'application d'étiquettes sur des produits

(30) Priorität: 16.04.2012 DE 102012103265; 23.05.2012 DE 102012104458; 02.07.2012 DE 102012105837; 10.12.2012 DE 102012112000
(43) Veröffentlichungstag der Anmeldung: 23.10.2013
(73) Patentinhaber: Linhardt GmbH & Co. KG, 94234 Viechtach (DE)
(72) Erfinder: Seidl, Joachim, 83564 Soyen (DE)
(74) Vertreter: Glück Kritzenberger Patentanwälte PartGmbB

(56) Entgegenhaltungen:
- EP-A2- 1 629 966
- US-A- 2 304 787
- US-A- 4 475 969

## Beschreibung

Die Erfindung bezieht sich auf ein Verfahren gemäß Oberbegriff Patentanspruch 1.

Ein Verfahren zum Ausstatten von Produkten in Form von Packmitteln, welches die Merkmale des Oberbegriffs des Patentanspruches 1 aufweist, ist bekannt. Bei diesem bekannten Verfahren wird für die Ausstattung von Packmitteln ein Laminatmaterial verwendet, welches auf einem bahnförmigen Flach- oder Trägermaterial Einzellaminate aufweist, die über einen Trennlack oder Schälkleber am Trägermaterial gehalten sind und unter Verwendung eines Kleberauftrags aus einem Zweikomponentenkleber an das jeweilige Packmittel übergeben und mit diesem durch Anrollen verbunden werden, und zwar unter zunehmendem Abziehen des jeweiligen Einzellaminats von dem Trägermaterial. Hierfür sind der verwendete Zweikomponentenkleber und der Trennlack bzw. Schälkleber so gewählt, dass die Haftwirkung zwischen dem Einzellaminat und dem Trägermaterial kleiner ist als die Haftwirkung zwischen dem Einzellaminat und dem Packmittel.

Das Laminatmaterial wird so hergestellt, dass eine mit dem Trägermaterial über den Trennlack bzw. Schälkleber verbundene dünne Folie aus Kunststoff zunächst an ihrer Trägermaterial abgewandten Seite bedruckt (Hinterdruck) und dann mit dem Kleberauftrag versehen. Nach einer Vortrocknung des Kleberauftrags werden dieser und die Folie gestanzt oder geschnitten, und zwar in der Weise, dass hierbei durch erste quer zur Längsrichtung des Trägermaterials verlaufende Schnittlinien sowie durch zweite parallel zu einer Längsachse des Trägermaterials verlaufende Schnittlinien die Einzellaminate bzw. deren Ränder gebildet. Im Anschluss daran wird der die Einzellaminate nicht bildende Folienrest (Matrix) abgezogen, sodass sich dann auf dem Trägermaterial nur noch die Einzellaminate befinden, die voneinander beabstandeten und jeweils von einem den Kleberauftrag nicht aufweisenden Teil, d.h. von einem kleberfreien Teil des Trägermaterials umgeben und damit bei dem Aufbringen der Einzellaminate auf die Packmittel, d.h. beim Laminieren der Packmittel störende mit Kleber behaftete und an die Einzellaminate angrenzende Bereiche des Trägermaterials vermieden sind. Nachteilig ist hierbei insbesondere, dass der vor dem Aufbringen der Einzellaminate auf die Packmittel abzuziehende Folienrest eine leiterartige Struktur (Matrix) aufweist, und zwar mit zwei Längsstegen und einer Vielzahl von Querstegen. Insbesondere durch die Querstege ist ein sicheres und störungsfreies Abziehen des Folienrestes vom Trägermaterial nicht gewährleistet. Dies gilt insbesondere bei sehr dünnen Folien. Weiterhin ist das Entsorgen des leiter- oder matrixartigen Folienrestes durch Aufwickeln in einer vernünftigen Weise nicht möglich.

Aufgabe der Erfindung ist es, ein Verfahren aufzuzeigen, welches die vorgenannten Nachteile vermeidet. Zur Lösung dieser Aufgabe ist ein Verfahren entsprechend dem Patentanspruch 1 ausgebildet.

Ein besonderer Vorteil der Erfindung besteht darin, dass zur Vermeidung von störenden mit Kleber behafteten Bereichen nach der Bildung dieser Einzellaminate durch Stanzen und/oder Schneiden als Folienrest lediglich Folienstreifen von dem Trägermaterial abgezogen werden müssen. Dies ist selbst bei Verwendung bei einer sehr dünnen Folie ohne Probleme und Störungen möglich. Diese Folienstreifen können dann durch Aufwickeln, beispielsweise auch durch Aufwickeln zu einer Kreuzwicklung problemlos entsorgt werden. Ein weiterer wesentlicher Vorteil besteht in einer verbesserten Ausnutzung der die Einzellaminate bildenden Folie und des Trägermaterials, was u.a. eine erhebliche Material- und Kostenersparnis bedeutet.

Das Dokument US 4 475 969 offenbart ein Verfahren zum Ausstatten von Produkten durch Aufbringen von Einzellaminaten. Bei einer Ausführungsform schließen sämtliche Einzellaminate jeweils an einer ersten, quer bzw. senkrecht zur Längsrichtung des Trägermaterials verlaufende Trennlinie unmittelbar aneinander an. Bei einer weiteren Ausführungsform der Erfindung bilden die Einzellaminate jeweils Gruppen von wenigstens zwei, bevorzugt von mehr als zwei Einzellaminaten, die über eine erste Trennlinie unmittelbar aneinander anschließen, wobei zwischen den Gruppen jeweils Zwischenlaminate vorgesehen sind. Diese sind aber durch die Trennlinien sowohl von den benachbarten Einzellaminaten als auch von den abzuziehenden streifenförmigen Folienresten getrennt und verbleiben auf dem Trägermaterial, d.h. die Zwischenlaminate werden mit dem Trägermaterial durch Aufwickeln entsorgt.
"Einzellaminate" sind im Sinne der Erfindung jeweils die beim Schneiden oder Stanzen durch die ersten und zweiten Trennlinien erzeugte Teile der Folie, mit denen die Produkte laminiert werden.
"Laminiermaterial" bedeutet in Sinne der Erfindung das zumindest aus dem Trägermaterial und den Einzellaminaten bestehenden und für das Laminieren der Produkte verwendete bahnförmige Material mit dem Klebstoffauftrag und nach dem Abziehen der streifenförmigen Folienreste.
"Ausgangsmaterial" ist im Sinne der Erfindung das bahnförmige, zumindest aus dem Trägermaterial und den Einzellaminaten bestehende Material vor dem Abziehen der streifenförmigen Folienreste.
In Weiterbildung der Erfindung ist das erfindungsgemäße Verfahren beispielsweise so ausgebildet,
dass das Stanzen oder Schneiden der Folie derart erfolgt, dass die auf dem Trägermaterial angeordneten Einzellaminate Gruppen bestehend aus jeweils wenigstens zwei an einer ersten Trennlinie unmittelbar aneinander anschließenden Einzellaminaten bilden, vorzugsweise von mehr als zwei jeweils an ersten Trennlinien unmittelbar aneinander anschließenden Einzellaminaten, und dass zwischen den Gruppen Zwischenlaminate vorgesehen sind, die jeweils durch die zweiten Trennlinien und durch zwei in Längsrichtung des Trägermaterials voneinander beabstandeten erste Trennlinien gebildet sind,
und/oder
dass bei der Übergabe eines Einzellaminats an ein Produkt dieses Einzellaminat zunächst mit einem Bereich, der entgegen einer Transportrichtung des Laminatmaterials von einem vorauseilenden Ende des Einzellaminats beabstandet ist, beispielsweise einen Abstand in der Größenordnung von 2mm - 6mm aufweist, gegen das Produkt angedrückt wird, dass anschließend durch eine Bewegung entgegen der Transportrichtung auch das vorauseilende Ende des Einzellaminats gegen das Produkt angepresst wird, und dass anschließend unter Bewegen des Laminatmaterials in Förderrichtung das Aufbringen des Einzellaminats auf das Produkt unter Abziehen dieses Laminats von dem Trägermaterial erfolgt,
und/oder
dass das Aufbringen des jeweiligen Einzellaminats auf das Produkt derart erfolgt, dass ein hierbei nacheilendes Ende des Einzellaminats das bereits auf dem Produkt fixierte vorauseilende Ende des Einzellaminats zur Ausbildung einer Überlaminierung überlappt,
und/oder
dass das Aufbringen der Einzellaminate auf die Produkt mit Hilfe einer Anpress- und Laminierwalze erfolgt, über die das Laminatmaterial und das Trägermaterial geführt ist und die durch einen gesteuerten Antrieb angetrieben ist, wobei die Anpress- und Laminierwalze das Einzellaminat während der Übergabe und während des Aufbringens oder Anrollens an ein Produkt gegen das Produkt andrückt,
und/oder
dass die Anpress- und Laminierwalze radial zu seiner Achse durch einen Stellantrieb zwischen einer Ausgangsposition, in der sie und das über die Anpress- und Laminierwalze geführte Laminatmaterial von dem Produkt beabstandet sind, und einer Zustellposition bewegbar ist, in der das Laminatmaterial über die Anpress- und Laminierwalze angepresst gegen das an der Übergabe- und Anrollposition befindliche Produkt anliegt,
und/oder
dass die Anpress- und Laminierwalze in ihre Ausgangsposition zurückbewegt wird, bevor das nacheilende Ende des Einzellaminats die Anpress- und Laminierwalze passiert,
und/oder
dass bei Verarbeitung von Produkten mit von der Kreisform abweichendem Querschnitt die Anpress- und Laminierwalze und eine Anpresswalze, soweit vorhanden, auch radial zu ihren Achsen während des Laminierens bewegt werden,
und/oder
dass die Folie aus Kunststoff besteht, beispielsweise aus einem transparenten Kunststoff, z.B. aus PP, PT oder PET, und/oder eine Dicke im Bereich zwischen 2 µm und 5 µm aufweist,
und/oder
dass die Folie zumindest im Bereich der Einzellaminate an ihrer dem Trägermaterial abgewandten Oberflächenseite bedruckt wird,
und/oder
dass entlang wenigstens einer Längsseite des Trägermaterials wenigstens zwei voneinander beabstandete zweite Trennlinien durch Stanzen und/oder Schneiden in die Folie eingebracht werden, und dass der zwischen diesen beiden Trennlinien gebildete Folienstreifen als Folienrest abgezogen wird,
und/oder
dass das gesamte Folienmaterial seitlich von den Einzellaminaten als Folienrest abgezogen wird,
und/oder
dass das mit Markierungen versehene Folienmaterial seitlich von den Einzellaminaten erst unmittelbar oder im Wesentlichen unmittelbar vor dem Laminieren als Folienrest abgezogen wird,
und/oder
dass die Zwischenlaminate auf dem Trägermaterial verbleiben und mit diesem entsorgt werden,
und/oder
dass die Folienstreifen zum Entsorgen zu Kreuzwickelkörper aufgewickelt werden, und/oder
dass die Produkte zumindest an ihren mit den Einzellaminaten zu versehenen Bereichen eine runden oder kreiszylinderförmigen oder einen von der Kreisform abweichenden Querschnitt, z.B. einen ovalen oder polygonalen Querschnitt,
beispielsweise einen quadratischen oder rechteckförmigen Querschnitt aufweisen, wobei die vorgenannten Merkmale jeweils einzeln oder in beliebiger Kombination verwendet sein können.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: in schematischer Funktionsdarstellung eine Anlage zum Aufbringen von Einzellaminaten aus einer dünnen transparenten und hinterdruckten Folie oder Laminatfolie auf Produkte mit rotationssymmetrischer Mantelfläche und dabei auf Produkte in Form von Packmitteln unter Verwendung eines Laminiermaterial;
- Fig. 2: in vereinfachter Darstellung und in Draufsicht eine Teillänge des Ausgangsmaterials;
- Fig. 3: in vereinfachter Darstellung und in Draufsicht eine Teillänge des Laminiermaterials;
- Fig. 4: in vereinfachter Darstellung und in Draufsicht eine Teillänge des Ausgangsmaterials mit den beiden abzuziehenden Folienstreifen;
- Fig. 5: in vereinfachter Darstellung und in Draufsicht eine Teillänge des Trägermaterials nach dem Laminieren;
- Fig. 6: in schematischer Darstellung das Aufwickeln des Folienrestes bzw. der Folienstreifen;
- Fig. 7 - 14: jeweils in schematischer Darstellung Details der Laminiervorrichtung des zweiten Anlagenteils in verschiedenen Betriebszuständen;
- Fig. 15: in vereinfachter Darstellung und in Draufsicht eine Teillänge des Laminiermaterials, bei einer weiteren Ausführungsform der Erfindung mit Zwischenlaminat;
- Fig. 16: in vereinfachter Darstellung und in Draufsicht eine Teillänge des Trägermaterials bei Ausführungsform der Erfindung gemäß Figur 15;
- Fig. 17: in schematischer Darstellung Details der Laminiervorrichtung des zweiten Anlagenteils bei Verwendung des Laminatmaterials der Figur 15;
- Fig. 18: in schematischer Funktionsdarstellung eine Anlage zum Aufbringen von Einzellaminaten aus einer dünnen transparenten und hinterdruckten Folie oder Laminatfolie auf Packmittel unter Verwendung eines Laminiermaterial, bei einer Weiteren Ausführungsform der Erfindung;
- Fig. 19: zeigt in schematischer Funktionsdarstellung eine weitere Ausführungsform einer Anlage zum Aufbringen von Einzellaminaten aus einer dünnen, transparenten und hinterdruckten Folie oder Laminatfolie auf die rotationssymmetrische bzw. kreiszylinderförmige Außen- oder Mantelfläche von Produkten in Form von Stiften unter Verwendung eines Laminatmaterials;
- Fig. 20: in schematischer Darstellung Details der Laminiervorrichtung des zweiten Anlagenteils der Anlage der Figur 19;
- Fig. 21 und 22: jeweils in schematischer Funktionsdarstellung eine Anlage zum Aufbringen von Einzellaminaten aus einer dünnen, transparenten und hinterdruckten Folie oder Laminatfolie auf die rotationssymmetrische bzw. kreiszylinderförmige Außen- oder Mantelfläche von Produkten, z.B. in Form von Packmitteln oder Stiften;
- Fig. 23 - 27: weitere Ausführungsformen einer Anlage zum Ausstatten von Produkten durch Aufbringen von Einzellaminaten gemäß der Erfindung sowie die Laminiereinheiten dieser Anlage und deren Funktionselemente;
- Fig. 28: in einer Darstellung ähnlich Figur 3 eine Teillänge des Laminatmaterials mit zwei sich in Laminatmateriallängsrichtung erstreckenden Reihen von Einzellaminaten.

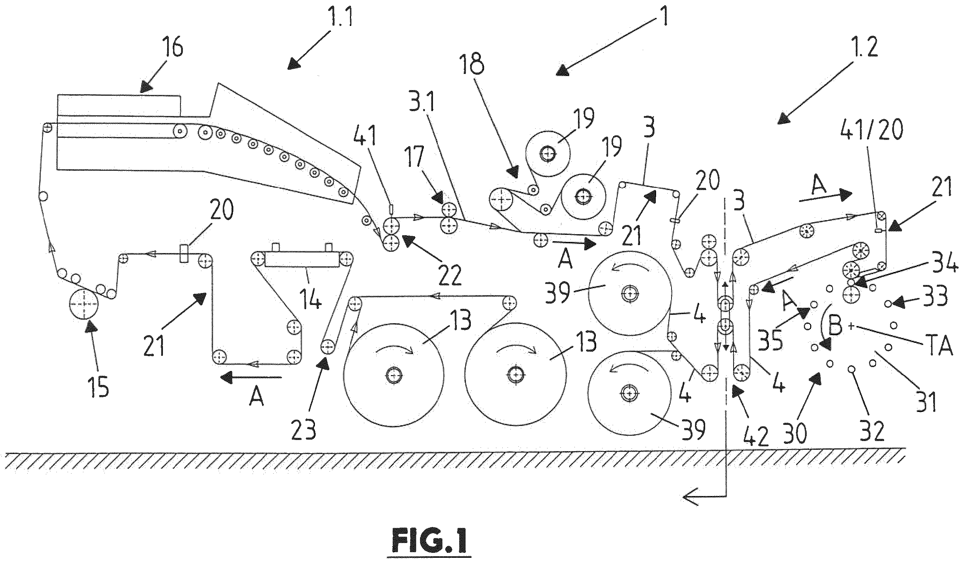

Die in der Figur 1 allgemein mit 1 bezeichnete Anlage dient zum Laminieren von Packmitteln 2, beispielsweise von Tuben oder deren Tubenkörper, aus solchen aus Metall und/oder Kunststoff mit Einzellaminaten 5.1 aus einer dünnen Folie an einer kreiszylinderförmigen Umfangsfläche,.

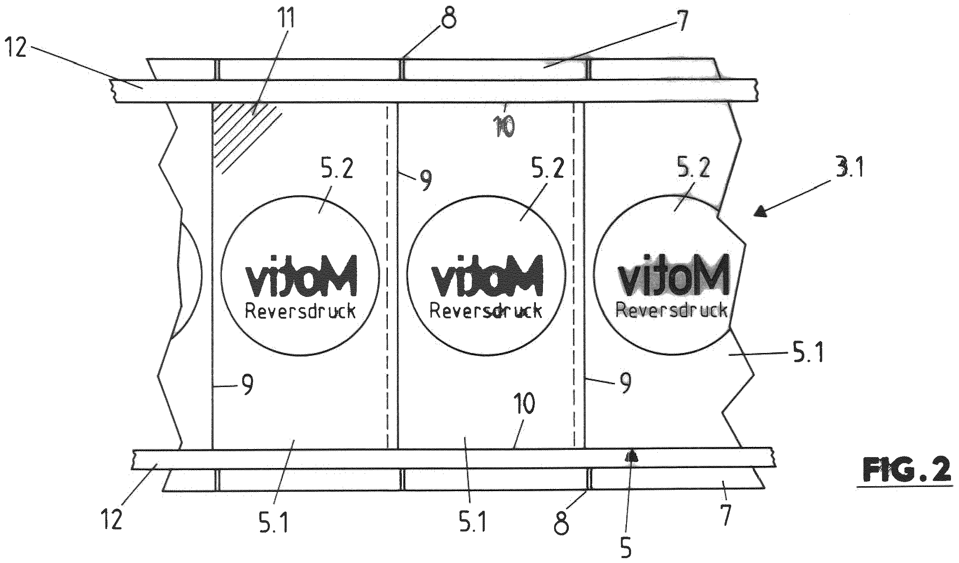

Die Anlage 1 besteht bei der dargestellten Ausführungsform aus zwei Anlagenteilen 1.1 und 1.2, von denen der Anlagenteil 1.1 zum Bereitstellen des zum Laminieren der Packmittel 2 verwendeten Laminatmaterials 3 dient, welches entsprechend der Figur 2 im Wesentlichen aus einem bahnförmigen Trägermaterial 4 aus einem Flachmaterial, z.B. aus Karton oder einem festen und auch hitzebeständigen Material und aus den in Längsrichtung des Trägermaterials 4 unmittelbar aneinander anschließenden, aber voneinander getrennten Einzellaminaten 5.1 besteht, die aus einer dünnen Folie 5 erzeugt und durch eine Schicht 6 aus einem Trennlack oder Schälkleber an dem Trägermaterial 4 gehalten sind. Die Folie 5 bzw. die von dieser gebildeten Einzellaminate 5.1 bestehen beispielsweise PE oder PT oder PET und besitzen eine Dicke im Bereich zwischen 2 und 20 *µ*m, vorzugsweise eine Dicke im Bereich zwischen 2 und 5 *µ*m.

An seinen beiden Längsrändern ist das Trägermaterial 4 jeweils mit einem Randstreifen 7 versehen, der entweder ebenfalls von der dünnen, durch die Schicht 6 gehaltenen Folie 5 oder aber durch über die Einzellaminate 5.1 vorstehende Randbereiche des Trägermaterials 4 gebildet sind. Der Randstreifen 7 ist bei der dargestellten Ausführungsform mit Markierungen 8 versehen, die eine exakte Zuordnung zu den Einzellaminaten 5.1 bzw. deren Aufdruck 5.2 (Hinterdruck) aufweisen und die in der nachstehend noch näher beschriebenen Weise zur Steuerung des Laminierens der Packmittel 2 dienen.

Generell erfolgt dieses Laminieren der Packmittel 2 mit der Anlage 1 in der Weise, dass zunächst ein Ausgangsmaterial 3.1 bereit gestellt wird, welches aus dem Trägermaterial 4 und der mit dem Aufdruck 5.2 versehenen Folie 5 besteht. Auf die dem Trägermaterial 4 abgewandte und mit dem Aufdruck 5.2 versehene Seite der Folie 5 erfolgt dann ein Kleberauftrag 11 in Form eines Heiß- oder Schmelzklebers auf Kunststoffbasis. Im Anschluss daran werden aus der Folie 5 durch Stanzen und/oder Schneide die Einzellaminate 5.1 erzeugt, und zwar durch die Ränder der Einzellaminate 5.1 bildende Trennlinien 9 und 10. Die ersten Trennlinien 9 verlaufen senkrecht zur Längserstreckung des bahnförmigen Trägermaterials 4 und trennen die Einzellaminate 5.1 voneinander. Die beiden zweiten Trennlinien 10 erstrecken sich jeweils in Längsrichtung des Trägermaterials 4 mit Abstand von dem jeweiligen äußeren Randstreifen 7 und sind durchgehend ausgeführt, d.h. sie erstrecken sich unterbrechungsfrei über die gesamte Länge des Trägermaterials 4 bzw. des für das Laminieren genutzten Laminiermaterials 3. Die Trennlinien 10 erzeugen jeweils einen durchgehenden, d.h. nicht unterbrochenen Folienstreifens 12 zwischen den Einzellaminaten 5.1 und dem äußeren Randstreifen 7.

Vor dem Laminieren der Packmittel 2 werden die beiden Folienstreifen 12 zur Bildung des Laminiermaterials 3 abgezogen, sodass die mit dem Kleberauftrag versehenen Einzellaminate 5.1 von den beiden Randstreifen 7 durch einen kleberfreien streifenförmigen Bereich 12.1 beabstandet sind, was u.a. für eine saubere Arbeitsweise beim anschließenden Aufbringen bzw. Laminieren der Einzellaminate 5.1 auf die Packmittel 2 von Bedeutung ist. Die Breite der Folienstreifen und damit die Breite der kleberfreien streifenförmigen Bereiche 12.1 betragen beispielsweise 10mm.

Das so im Anlagenteil 1.1 erzeugte und mit dem Kleberauftrag 12 versehene Laminatmaterial 3 wird dann dem Anlagenteil 1.2 zugeführt, in welchem die Einzellaminate 5.1 in der nachstehend noch näher beschriebenen Weise von dem Trägermaterial 4 abgenommen und durch Anrollen auf das jeweilige Packmittel 2 aufgebracht werden, sodass dann der Aufdruck 5.2 durch die Einzellaminat 5.1 hindurch an der Außenseite des mit dieser Folie 5 ausgestatteten Packmittels 2 optisch sichtbar ist.

### Anlagenteil 1.1

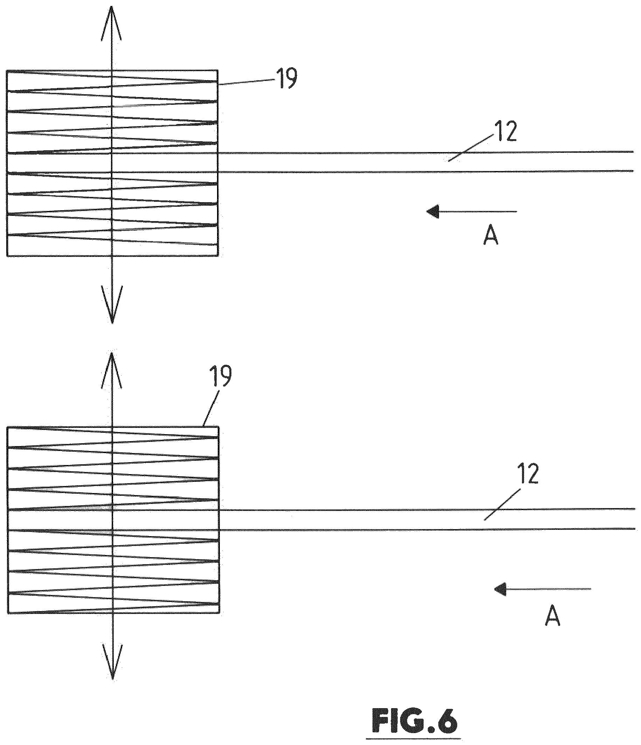

Das Ausgangsmaterial 3.1 wird als Vorrat bzw. Vorratsrolle 13 bereitgestellt. Um einen kontinuierlichen unterbrechungsfreien Betrieb zu gewährleisten, sind zwei derartige Vorratsrollen 13 vorgesehen, von denen eine genutzt und die zweite jeweils als Reserve bereitsteht. Das Ausgangsmaterial 3.1 wird von der jeweils genutzten Vorratsrolle 13 in Richtung des Pfeils A abgezogen und durchläuft zunächst eine Spleißvorrichtung 14, in der das Ende einer verbrauchten Vorratsrolle 13 mit dem Anfang der als Reserve bereitstehenden Vorratsrolle 13 z.B. automatisch verbunden wird. Nach der Spleißvorrichtung 14 gelangt das Ausgangsmaterial 3.1 an eine Station 15, in der der Kleberauftrag 11 erfolgt, und zwar ausschließlich auf den von der Folie 5 abgedeckten Bereich des Ausgangsmaterials 3.1, d.h. auf den Bereich, der später zumindest die Folienstreifen 12 sowie die Einzellaminate 5.1 bildet. In einer weiteren Station 16 erfolgen dann ein Vortrocknen des Kleberauftrags 11 und gegebenenfalls ein anschließendes Abkühlen des Ausgangsmaterials 3.1, so dass sich der Kleber des Kleberauftrags 11 in einem getrockneten Zustand befindet. Das mit dem Kleberauftrag 11 versehende Ausgangsmaterial 3.1 durchläuft dann eine Stanzeinheit 17, in der unter Verwendung von wenigstens einem, beispielsweise rotierenden Stanzwerkzeug die Schnitte oder Trennlinien 9 und 10 lediglich im Kleberauftrag 11 sowie in der Folie 5 erzeugt werden. Im Anschluss daran werden die Folienstreifen 12 zum Erzeugen der kleberfreien Randbereiche 12.1 abgezogen und zu Wicklungen oder Wickelkörper 19 aufgewickelt. Dieses Aufwickeln erfolgt entsprechend der Figur 6 vorzugsweise in einem Kreuzwickelverfahren, sodass stabile walzenartige Wickelkörper 19 mit einer axialen Länge erhalten werden, die wesentlich größer ist als die Breite der abgezogenen Folienstreifen 12. Nach dem Abziehen der Folienstreifen 12 steht das mit dem Kleberauftrag versehene Laminatmaterial 3 zur Verfügung.

Der ordnungsgemäße Transport des Ausgangsmaterials 3.1 sowie auch des nach dem Abziehen der Folienstreifen 12 erhaltenen Laminatmaterials 3 wird innerhalb des Anlagenteils 1.1 durch mehrere Sensoren überwacht, u.a. mit Sensoren 20 für eine erste und zweite Einrichtung 21 für die Kantensteuerung des Ausgangsmaterials 3.1 und des Laminatmaterials 3 sowie auch eine Einrichtung 22 zur Erzeugung des Bahntransportes bzw. zum Abziehen des Ausgangsmaterials 3.1 von der Vorratsrolle 13 und eine Einrichtung 23 zur Regulierung der Bahnspannung vorgesehen.

### Anlagenteil 1.2

Zum Aufbringen der Einzellaminate 5.1 auf die Packmittel 2 weist das Anlagenteil 1.2 als zentrales Element eine Laminierstation 30 auf, die bei der dargestellten Ausführungsform u.a. einen um eine Trägerachse TA, beispielsweise um eine horizontale Achse schrittweise und gesteuert in Richtung des Pfeils B drehbaren Träger 31 aufweist, der an seinem Umfang mit einer Vielzahl von Packmittelaufnahmen in Form von Dornen 32 versehen ist. Die Dorne 32, die mit ihren Achsen jeweils parallel zu einander und zur Achse TA orientiert sind, stehen über eine gemeinsame Seite des beispielsweise kreisscheibenförmigen Trägers 31 vor und sind jeweils an einem Ende an diesem Träger 31 um ihre Dornachse frei drehbar gelagert. Die Dorne 32 sind weiterhin gleichmäßigen Winkelabständen und in demselben radialen Abstand von der Achse TA um diese Achse verteilt vorgesehen.

Die mit den Einzellaminaten 5.1 zu versehenen oder zu laminierenden Packmittel 2 werden an einer Aufgabeposition 33 auf jeweils einen dort bereitstehenden Dorn 32 aufgesetzt, gelangen dann auf diesem Dorn 32 gehalten mit der getakteten Drehbewegung des Trägers 31 an eine Übergabe- und Anrollposition 34, an der das jeweilige Einzellaminat 5.1 an das betreffende am Dorn 32 gehaltene Packmittel 2 übergeben bzw. mit einem vorauseilenden Bereich an die Umfangsfläche des Packmittels 2 angedrückt wird, sodass das Einzellaminat dann durch den Kleberauftrag 11 am Packmittel 2 haftet und an der Übergabe- und Anrollposition 34 durch Drehen des Dornes 32 und des Packmittels 2 um die Dornachse an das Packmittel abgerollt und dabei zugleich zunehmend von dem Trägermaterial 4 abgezogen wird. Das so mit dem Einzellaminat 5.1 versehene bzw. laminierte Packmittel 2 gelangt dann durch getaktete Drehbewegung des Trägers 31 an eine Abnahmeposition 35, an der das Packmittel von dem Dorn 32 abgenommen wird.

Bei der dargestellten Ausführungsform weist die Laminiereinheit 30 an der Übergabe-und Anrollposition 34 u.a. eine als Anpress- und Stützwalze dienende Walze 36 sowie eine als Anpress- und Laminierwalze dienende Walze 37 auf. Die Walze 36 ist frei drehbar oder durch einen gesteuerten Antrieb um eine Stützwalzenachse STA umlaufend antreibbar, und zwar für eine Vorwärtsdrehbewegung entsprechend dem Pfeil C und für eine Rückwärtsdrehbewegung entsprechend dem Pfeil C'. Die Walze 37 ist durch einen gesteuerten Antrieb um eine Laminierwalzenachse LA umlaufend antreibbar, und zwar für eine Vorwärtsdrehbewegung bzw. für den Transport des Laminatmaterials 3 in Transportrichtung A entsprechend dem Pfeil D und für eine Rückwärtsdrehbewegung entsprechend dem Pfeil D'.

Die beiden Achsen STA und LA sind parallel zueinander und parallel zu der Achse TA orientiert und befinden sich in einer gemeinsamen Ebene E, in der auch die Achse TA angeordnet ist. Weiterhin befindet sich die Walze 36 innerhalb der Bewegungsbahn der Dorne 32 bzw. der auf diesen angeordneten Packmittel 2. Die Walze 37 befindet sich außerhalb der Bewegungsbahn der Dorne 32 bzw. der auf diesen angeordneten Packmittel 2. Beide Walzen 36 und 37 sind durch gesteuerte Stellantriebe um einen kleinen Hub H, beispielsweise um einen Hub H in der Größenordnung von 1mm - 3mm gesteuert radial zu ihren Achsen STA bzw. LA und damit auch radial zu der Achse TA bewegbar, und zwar jeweils zwischen einer Ausgangsposition, in der die betreffende Walze von dem an der Übergabeposition 34 befindlichen Packmittel 2 beabstandet ist, und einer Zustellposition in der die betreffende Walze gegen das Packmittel 2 unmittelbar (Walze 36) oder mittelbar über das Laminatmaterial 3 anliegt (Walze 37). Die Walzen 36 und 37 sind jeweils an ihrer Walzenumfangsfläche mit einer elastischen und vorzugsweise nicht haftenden Beschichtung versehen, beispielsweise mit einer Beschichtung oder Auflage aus Silikongummi.

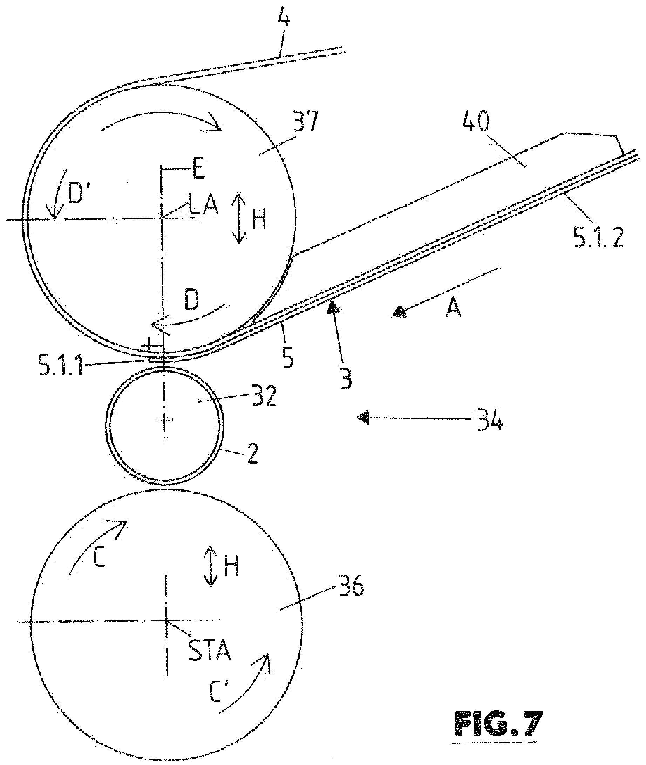

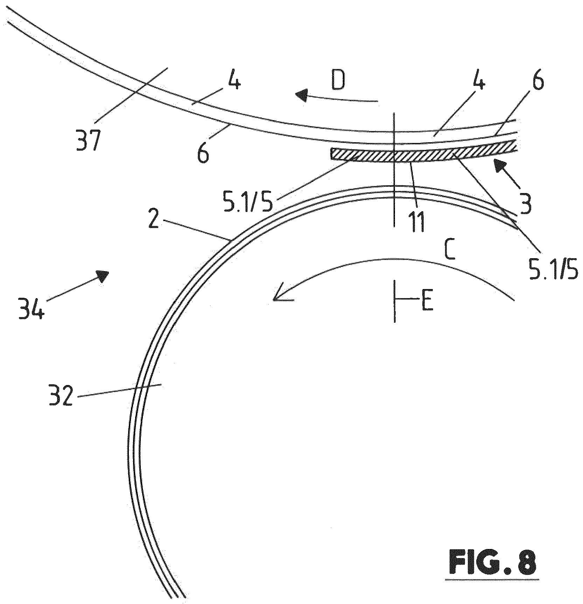

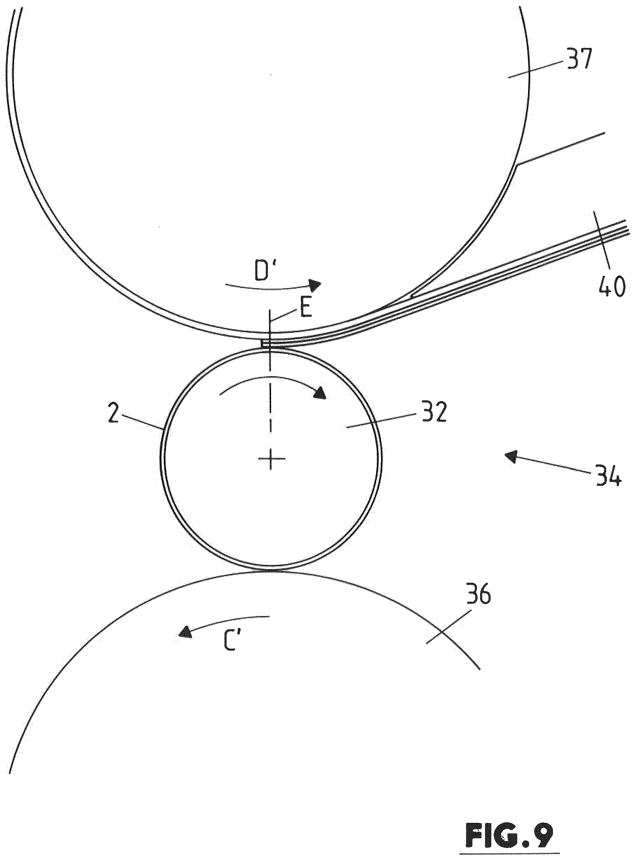

Die Figuren 7 und 8 zeigen den Zustand der Laminiereinheit 30 kurz vor der Übergabe eines Einzellaminats 5.1 an ein Packmittel 2. Das Laminatmaterial 3 ist hierfür über die Anpress- und Laminierwalze 37 derart geführt, dass sich das zu übertragende Einzellaminat 5.1 mit dem Bereich seines in Transportrichtung A vorauseilenden Endes 5.1.1 dem Packmittel 2 gegenüberliegt, dieses durch eine Trennlinie 9 erzeugte Ende 5.1.1 aber in Transportrichtung A bereits über die Ebene E vorsteht, beispielsweise um einen Betrag von 2mm - 6mm. In diesem Zustand werden die Drehbewegung der Walze 37 und damit der Transport des Laminatmaterials 3 gestoppt (Figuren 7 und 8). Im Anschluss daran erfolgen entsprechend der Figur 9 das Zustellen der Walzen 36 und 37 gegen das Packmittel 2 und damit das Andrücken der Einzellaminat 5.1 gegen das Packmittel 2. Bei weiter zugestellten Walzen 36 und 37 erfolgt zunächst eine Rückwärtsdrehbewegung beider Walzen 36 und 37 um einen kurzen Winkelbetrag in Richtung der Pfeile C' bzw. D', sodass das Einzellaminat 5.1 auch mit seinem tatsächlichen, durch die Trennlinie 9 erzeugten und beim Laminieren vorauseilenden Ende 5.1.1 gegen das Packmittel 2 angepresst wird. Im Anschluss daran erfolgt durch Drehen der weiterhin zugestellten Walzen 36 und 37 in ihrer Vorwärtsdrehrichtung C bzw. D das vollständige Anrollen der betreffenden Einzellaminat 5.1. Hierbei wird der Anfang des Einzellaminats 5.1 zweimal an das Packmittel 2 angepresst. Durch das zweimalige Anpressen wird die Haftung des Einzellaminats 5.1 am Packmittel 2 verbessert, so dass es sich beim weiteren Anrollen einwandfrei von dem Trägermaterial 4 löst.

Die Abmessung, die die Einzellaminate 5.1 auf dem Laminatmaterial 3 in Bahnlängsrichtung aufweisen, kann beispielsweise so auf den Durchmesser bzw. Umfang der Packmittel 2 abgestellt sein, dass das von einer Trennlinie 9 gebildete Ende 5.1.1 und das von einer weiteren Trennlinie 9 gebildete Ende 5.1.2 des auf das Packmittel 2 aufgebrachten Einzellaminats 5.1 einander unmittelbar benachbart sind, d.h. beispielsweise ohne Abstand oder im Wesentlichen ohne Abstand aneinander anschließen. Dies ist aber in der Regel nicht erreichbar und schränkt darüber hinaus auch die Möglichkeiten der Gestaltung von Packmitteln 2 und deren Ausstattung stark ein, zumal die Breite, die die Einzellaminate 5.1 in Längsrichtung des Laminatmaterials 3 aufweisen (Abstand zweier Trennlinien 9), auch von den drucktechnischen Möglichkeiten und den vorgegebenen technischen Daten der für das Bedrucken der Folien 5 verwendeten Druckeinrichtung abhängig ist, zumal für die Einzellaminate 5.1 in der Regel ein vollflächiger Aufdruck 5.2 erwünscht ist. Aus diesem Grunde ist es zweckmäßig, die Einzellaminat 5.1 auf die Packmittel 2 so aufzubringen, dass sich die Enden 5.1.1 und 5.1.2 überlappen, d.h. eine Überlaminierung 38 bilden. In dieser können dann auch drucktechnisch bedingte, nicht vollständig bedruckte Randbereiche der Einzellaminate 5.1 optisch "versteckt" werden, sodass sich für das mit dem jeweiligen Einzellaminat 5.1 versehende Packmittel 2 zumindest optisch eine nicht unterbrochene Rundum-Ausstattung ergibt. Ein gewisses Problem besteht nämlich bei den im Laminatmaterial 3 unmittelbar an den Trennlinien 9 aneinander anschließenden Einzellaminaten 5.1 auch darin, dass es drucktechnisch bedingt nicht oder aber nicht in jedem Fail möglich ist, diese Einzellaminate über ihre gesamte in Laufrichtung des Laminatmaterials 3 orientierte Breite vollflächig zu bedrucken. Vielmehr wird aus drucktechnischen Gründen an den Enden 5.1.1 und 5.1.2 zumindest ein sehr schmaler nicht bedruckter Rand verbleiben.

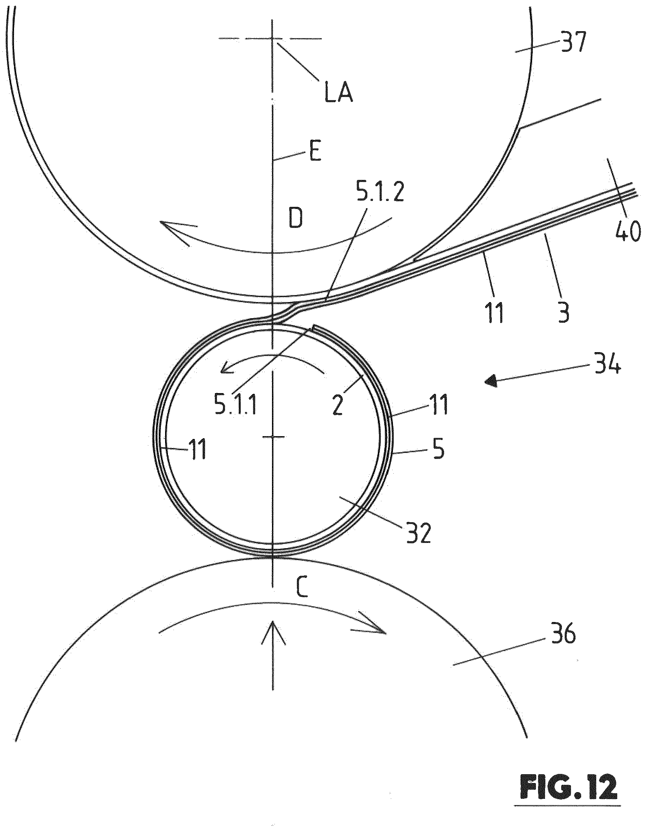

Entsprechend der Figur 12 wird die Walze 37 kurz vor dem vollständigen Anrollen des Einzellaminats 5.1 in ihre Ausgangsstellung bewegt, um zu vermeiden, dass das nächste Einzellaminat 5.1 mit angeklebt wird. Der noch nicht angepresste Rest des Einzellaminats 5.1 wird bei weiterhin drehendem Packmittel 2 von dem Trägermaterial 4 abgezogen und legt sich dann zunächst lose gegen das Packmittel 2 an. Die Walze 36 befindet sich weiterhin in ihrer Anpressstellung, sodass beim Passieren dieser Walze auch der zunächst nicht angepresste Rest bzw. das nacheilende Ende 5.1.2 des Einzellaminats 5.1 gegen das Packmittel 2 unter Ausbildung der Überlaminierung 38 angepresst wird. Bereits während des Anrollens des nacheilenden Endes 5.1.2 eines Einzellaminats 5.1 wird durch die Vorschubbewegung des Laminatmaterials 3 das nächst Einzellaminat 5.1 in die Übergabeposition 34 bewegt. Bevorzugt ist die Walze 37 und/oder 36 beheizt, beispielsweise elektrisch oder durch Heißluft oder Thermoöl.

Das Trägermaterial 4 ohne die Einzellaminate 5.1, aber mit dem Randstreifen 7 wird innerhalb des Anlagenteils 1.1 aufgewickelt, wie dies mit den Rollen 39 dargestellt ist. Um die Wirkung des Kleberauftrages 11, d.h. das Haften der Einzellaminate 5.1 an den Packmitteln zu verbessern und/oder um das Abbinden des Klebers zu beschleunigten ist in Transportrichtung A des Laminatmaterials 3 vor der Übergabe- und Anrollstation 34 eine Heizeinrichtung 40 vorgesehen, mit der das Laminatmaterial 3 erwärmt, beispielsweise auf ca. 120°C erwärmt und dadurch in einen zumindest zähflüssigen Zustand unmittelbar vor dem Laminieren versetzt wird.

Es versteht sich, dass die Steuerung der Laminiereinrichtung 30 bzw. der Drehbewegung sowie der Zustellbewegung der Walzen 36 und 37 und dabei insbesondere auch der Transport des Laminatmaterials 3 an die Übergabe- und Anrollstation 34 unter Verwendung der Markierungen 8 erfolgt, die mittels Sensoren 41 abgetastet werden und vorzugsweise zusammen mit dem Aufdruck 5.2 erzeugt wurden. Auch die Steuerung der Stanz- und Schneideinheit erfolgt mit wenigstens einem die Markierungen 8 abtastenden Sensor 41.

Innerhalb des Anlagenteils 1.1 erfolgt bei der dargestellten Ausführungsform eine kontinuierliche Bewegung des Ausgangsmaterials 3.1 bzw. des Laminatmaterials 3. Innerhalb des Anlagenteils 1.2 erfolgt bedingt durch die Arbeitsweise der Laminiereinrichtung 30 eine getaktete Bewegung des Laminatmaterials 3 und des Trägermaterials 4. Zur Anpassung dieser Bewegungen ist am Übergang zwischen den Anlageteilen 1.1 und 1.2 eine Vorschubausgleichseinheit 42 für das Laminatmaterial 3 und das Trägermaterial 4 vorgesehen.

Das Anlagenteil 1.1 ist bevorzugt ein eigenständiger Betrieb, z.B. Druckereibetrieb, der auf die Herstellung von Etikettenmaterial und/oder des Laminatmaterials 3 spezialisiert ist und der dieses Material an den die Laminiereinheit 30 betreibenden Verarbeiter liefert.

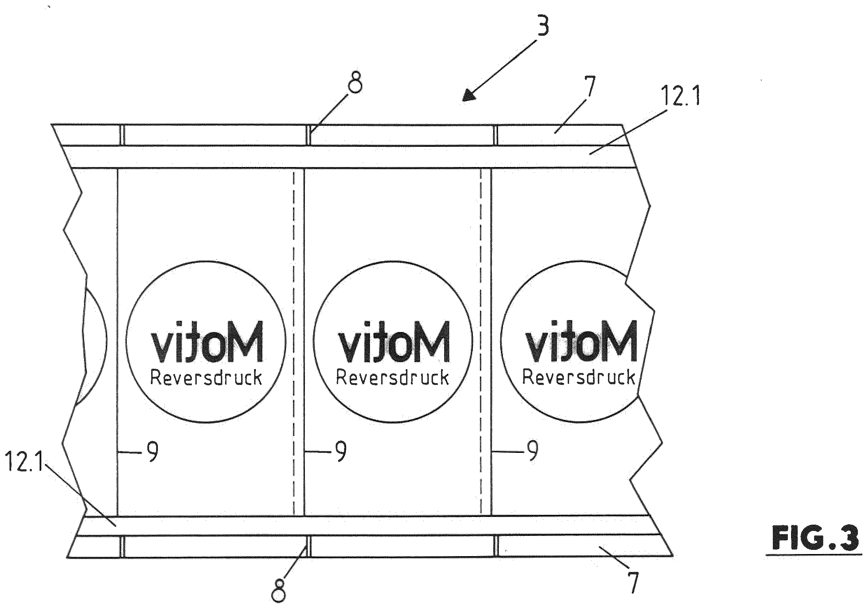

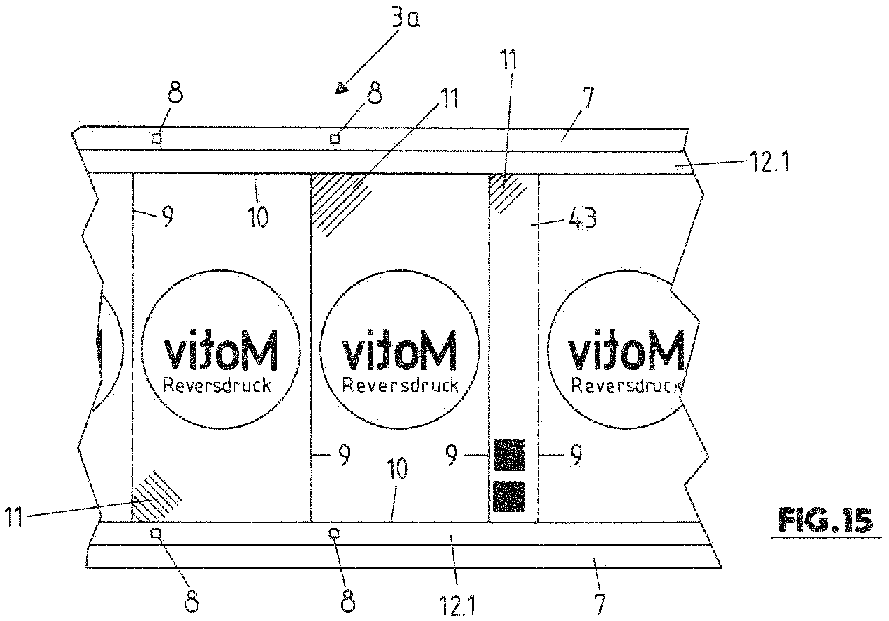

Vorstehend wurde davon ausgegangen, dass sämtliche Einzellaminate 5.1 im Laminatmaterial 3 unmittelbar aneinander anschließen und lediglich durch die Trennlinie 9 voneinander getrennt sind. Die Figur 15 zeigt in einer Darstellung ähnlich Figur 3 ein bereits mit dem Leimauftrag 12 versehenes Laminatmaterial 3a, bei dem die Einzellaminate 5.1 Gruppen bilden, die jeweils aus wenigstens zwei Einzellaminaten 5.1, bevorzugt aber aus mehr als zwei Einzellaminaten 5.1, beispielsweise aus sechs Einzellaminaten 5.1 bestehen, wobei zwischen den Gruppen jeweils ein Zwischenlaminat 43 vorgesehen ist. Das Laminatmaterial 3a wird analog zum Laminatmaterial 3 im Anlagenteil 1.1 der Anlage 1 erzeugt, insbesondere auch die Einzellaminate 5.1 und die Zwischenlaminate 43 nach dem Kleberauftrag 12 durch Einbringen der Trennlinien 9 und 10 mittels der Stanzeinheit 17. Durch die Zwischenlaminate 43 wird u.a. die Gestaltungsfreiheit bei der Ausbildung und Ausstattung der Packmittel 2 wesentlich erhöht. So können beispielsweise bei vorgegebenem Durchmesser eines Druckzylinders einer Druckeinrichtung zum Aufbringen des Aufdrucks 5.2 die Größe der Druckformen der jeweils benötigten Breite (Abstand zweier Trennlinien 9) Einzellaminate 5.1 angepasst werden, wobei der durch die Druckformen am Druckzylinder der Druckeinrichtung nicht genutzte Bereich des Druckzylinders bzw. der durch diesen Bereich fehlender Druck in das jeweilige Zwischenlaminat 43 verlegt werden.

Die Stanzeinheit 17 bzw. deren Stanzzylinder sind dabei beispielsweise so ausgelegt, dass bei jeder vollen Umdrehung des Stanzzylinders ein Zwischenlaminat 43 erzeugt wird.

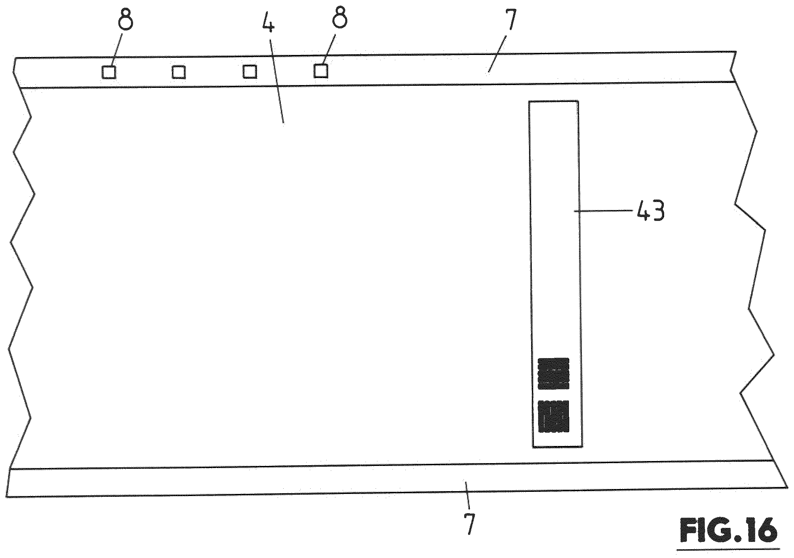

Das Aufbringen der Einzellaminate 5.1 auf die Packmittel 2 erfolgt mit dem Laminatmaterial 3a in gleicher Weise, wie dies vorstehend für das Laminatmaterial 3 beschrieben wurde, wobei aber die Steuerung des Vorschubs des Laminatmaterials 3a an der Übergabe- und Anrollposition 34 durch die gesteuerte Drehbewegung zumindest der Walze 37 und beispielsweise unter Berücksichtigung der Markierungen 8 derart erfolgt, dass die Zwischenlaminate 43 nicht an Packmittel 2 übergeben werden, sondern am Trägermaterial 4 verbleiben und zusammen mit diesem aufgewickelt werden (Figur 16).

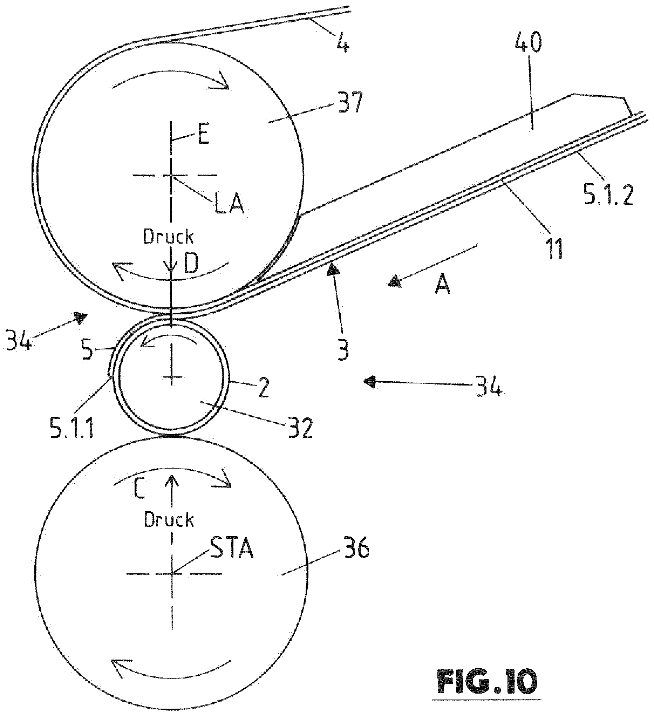

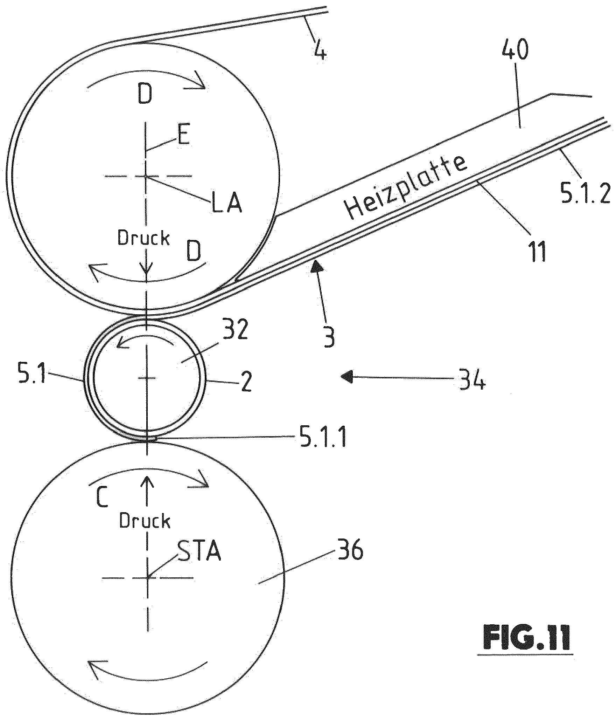

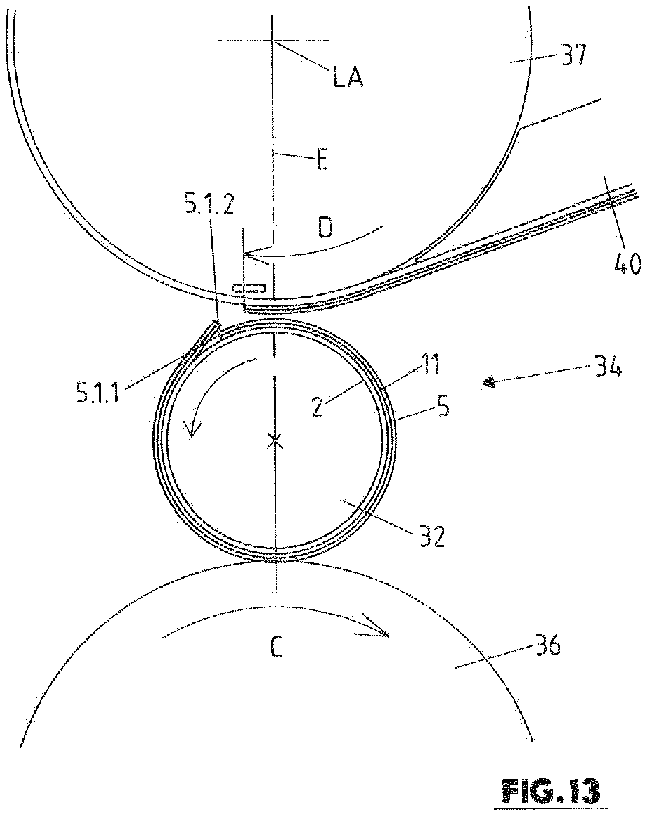

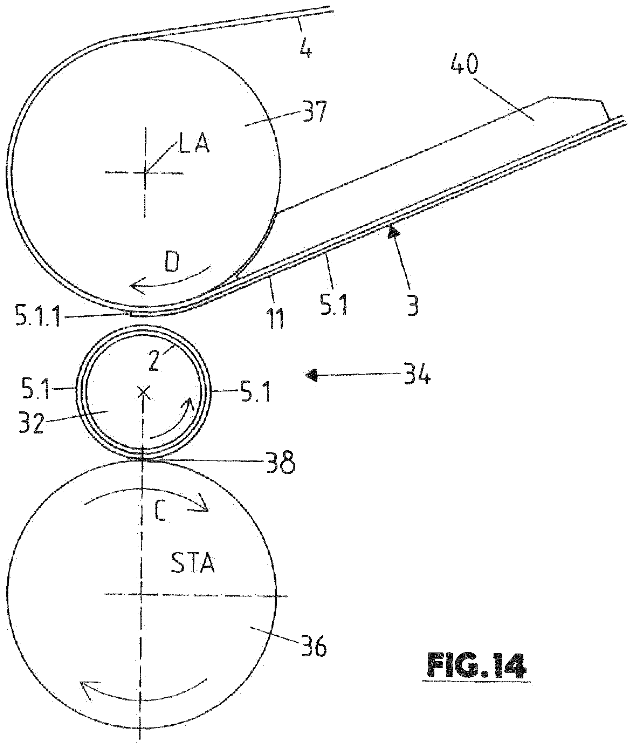

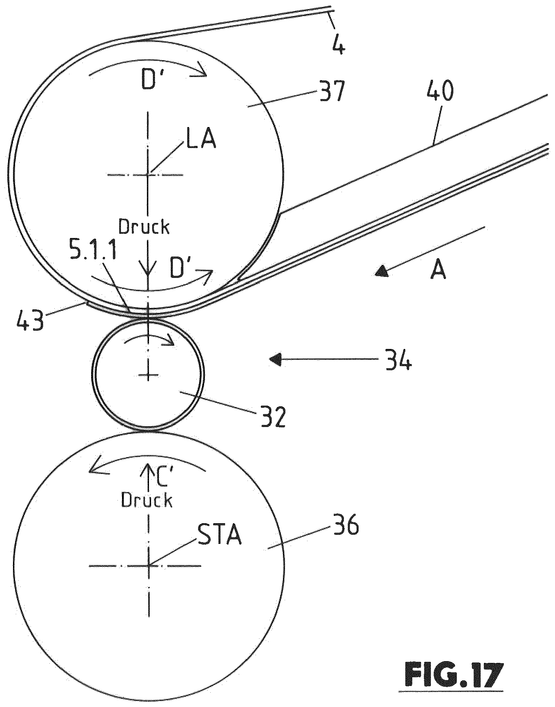

Das Übertragen und Aufbringen eines in Transportrichtung A des Laminatmaterials 3a auf ein Zwischenlaminat 43 folgenden Einzellaminats 5.1 erfolgt daher entsprechend den Figur 17 in der Weise, dass die Zustellung des Laminatmaterials 3a an der Übergabe- und Anrollposition 34 zunächst so erfolgt, dass sich das Zwischenlaminat 43 und das von der Trennlinie 9 gebildete fordere Ende 5.1.1 des Einzellaminats 5.1 in Transportrichtung A vor der Ebene E befinden und in diesem Zustand der Transport des Laminatmaterials 3a gestoppt und die beiden Walzen 36 und 37 zugestellt werden, sodass das mit dem Kleberauftrag 11 versehene Einzellaminat 5.1 an das Packmittel 2 angepresst wird. Im Anschluss daran erfolgt wiederum eine kurze Rückwärtsdrehbewegung der Walzen 36 und 37 (Pfeile C' und D') und damit eine kurze Rückbewegung des Laminatmaterials 3a, sodass nunmehr auch das fordere Ende 5.1.1 des Einzellaminats 5.1 gegen das Packmittel 2 angepresst ist. Im Anschluss daran erfolgt durch die Vorwärtsdrehbewegung der Walzen 36 und 37 (Pfeile C und D) das vollständige Abziehen des Einzellaminats 5.1 vom Trägermaterial 4 und Anrollen des Einzellaminats 5.1 an das Packmittel entsprechend den Figuren 10- 14. Das Trägermaterial

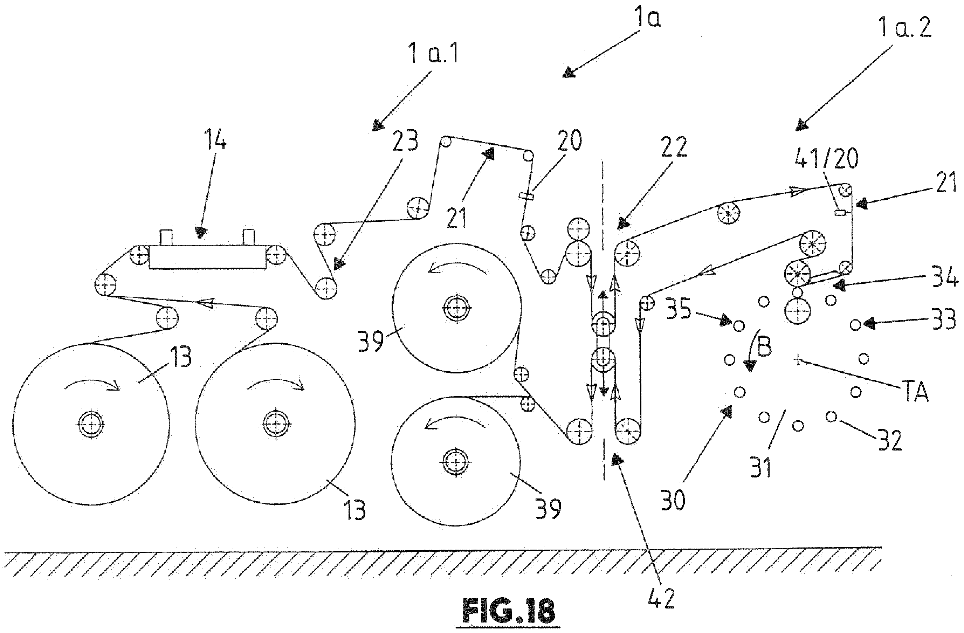

Die Figur 18 zeigt eine Anlage 1a, die wiederum aus dem Anlagenteil 1a.1 zum Bereitstellen des Laminatmaterials 3 oder 3a und aus dem, dem dem Anlagenteil 1.2 entsprechenden Anlagenteil 1a.2 zum Aufbringen der Einzellaminate 5 auf die Packmittel 2 unter Verwendung der Laminiereinheit 30 besteht. Die Anlage 1a unterscheidet sich von der Anlage 1 im Wesentlichen dadurch, dass das Laminatmaterial 3 oder 3a bereits im fertigen Zustand und mit einem von einem Schmelzkleber gebildeten Kleberauftrag 11 geliefert und auf den Rollen 13 bereitgestellt wird. Der Anlagenteil 1a.1 dient also im Wesentlichen nur zum Abziehen des Laminatmaterials 3 oder 3a von den Rollen 13, zur Steuerung und Überwachung des Transportes des Laminatmaterials 3 oder 3a, zum Zuführen dieses Laminatmaterials an den Anlagenteil 1a.2 sowie zum Aufwickeln des nicht mehr benötigten Trägermaterials 4 zu den Rollen bzw. Wicklungen 39 dient.

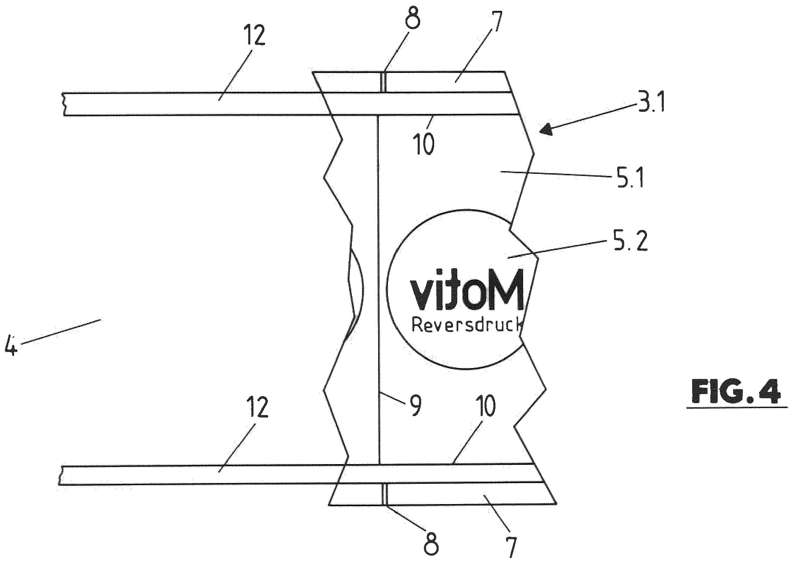

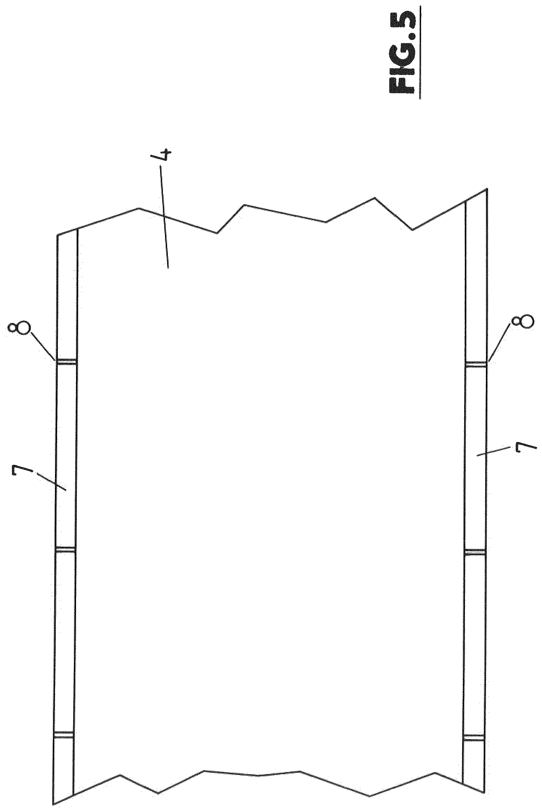

Das Laminatmaterial 3 oder 3a wird an die Anlage 1a von einer eigenständigen Laminier- und Druckanlage oder aber von einem außen stehenden Laminier- und Druckbetrieb geliefert. Die Verarbeitung des Laminatmaterials 3 oder 3a im Anlagenteil 1a.2 bzw. in der dortigen Laminiereinheit 30 erfolgt in gleicher Weise, wie dies vorstehend im Zusammenhang mit den Figuren 1 - 17 beschrieben wurde. Mit der Heizeinrichtung 40 wird der den Kleberauftrag 11 bildende Heiß- oder Schmelzkleber aktiviert, d.h. durch Hitzeeinwirkung in einen zumindest zähflüssigen Zustand versetzt wird, sodass mit diesem Kleber dann das Übertragen und anschließende Verbinden oder Laminieren des Einzellaminats 5.1 mit dem Packmittel 2durch Anrollen erreicht wird.

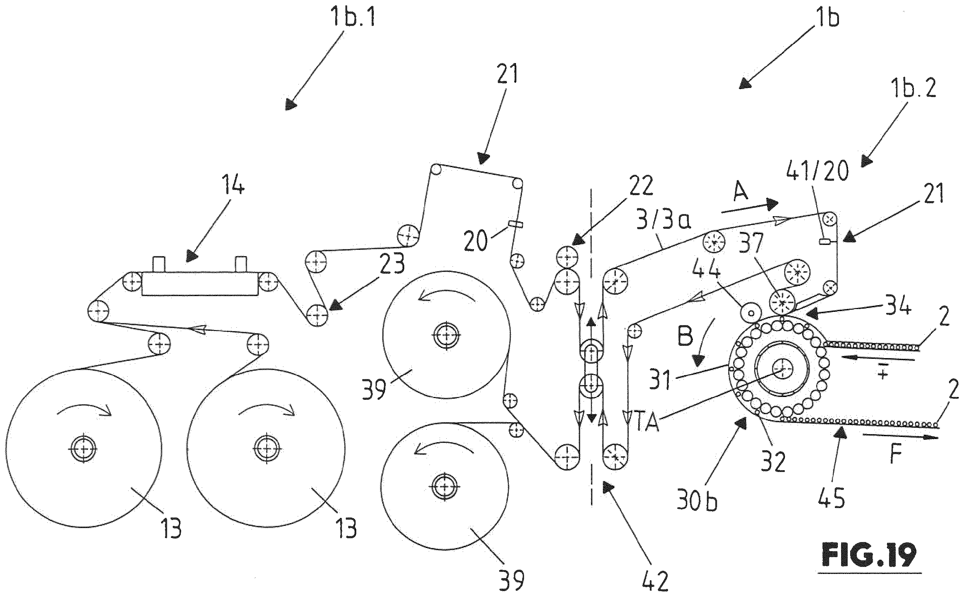

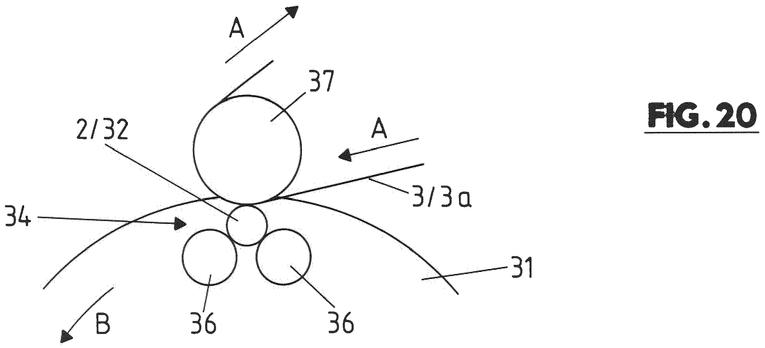

Die Figuren 19 und 20 zeigen als weitere Ausführungsform eine Anlage 1b zum Aufbringen von hinterdruckten Einzellaminaten 5.1 auf die rotationssymmetrischer bzw. zylindrischer Außenfläche von Produkten 2, z.B. in Form von Stiften, d.h. eine Anlage 1b zum Dekorieren derartiger Produkte. Die Anlage 1b fasst wiederum einen Anlageteil 1b.1 zum Bereitstellen des Laminatmaterials 3 bzw. 3a sowie einen Anlagenteil 1b, in welchem das eigentliche Laminieren der Produkte 2 erfolgt und welches hierfür die Laminiereinheit 30b aufweist.

Das Anlagenteil 1b.1 entspricht dem Anlagenteil 1a.1. Das Anlagenteil 1b.2 unterscheidet sich von dem Anlagenteil 1a.2 im Wesentlichen durch die Laminiereinheit 30. Diese weist an dem beispielsweise um eine horizontale Achse drehbaren Träger 31 in gleichmäßigen Winkelabständen um die Drehachse des Trägers 31 verteilt Produktaufnahmen für die Produkte 2 auf. Die Produktaufnahmen sind beispielsweise von kleinen Anpress- und/oder Stützwalzen gebildet. An dem Träger 31 sind bei der Laminiereinheit 30b jeder Aufnahme- oder Laminierposition 32 zwei Anpress- und Stützwalzen 36 zugeordnet, und zwar derart, dass diese in Drehrichtung B des Trägers 31 gegeneinander versetzt während des Laminierens das betreffende Produkt 2 abstützen. Die Achse jeder Laminierposition 32 beschreibt mit den Achsen der beiden zugehörigen Anpress- und Stützwalzen 36 ein Dreieck. Die Laminiereinheit 30b weist auch die Anpress- und Laminierwalze 37 und in Drehrichtung B des Trägers 31 auf die Übergabe- und Wickelposition 34 folgend eine zusätzliche Anpresswalze 44 auf, um die an das jeweilige Produkt 2a übergebene und dort durch Aufwickeln an der Übergabe- und Wickelposition am Produkt 2a fixierte Einzelfolie 5.1, insbesondere auch eine eventuelle Überlaminierung 38 dieser Einzelfolie fest gegen die Mantelfläche des Produktes 2a anzudrücken.
Der Träger 31 und der äußere Transporteur 45 sind wiederum getaktet bzw. schrittweise angetrieben, wobei in jeder Stillstandsphase der getakteten Bewegung die Übergabe und das vollständige oder nahezu vollständige Anrollen eines Einzellaminats 5.1 an ein Produkt 2 erfolgen.

Die zu laminierenden Produkte 2a werden der Laminiereinheit 30b bzw. deren Übergabe- und Wickelposition 34 über einen äußeren Transporteur 45 mit einer Transportrichtung F zugeführt. Die laminierten Produkte 2a werden über den äußeren Transporteur 45 wegtransportiert. Dieser äußere Transporteur 45 ist beispielsweise eine in der Transportrichtung F endlos umlaufende Transportkette mit entsprechenden Aufnahmen für die Produkte 2. Mit Hilfe eines nicht dargestellten Manipulators erfolgt der Transfer der Produkte 2 zwischen dem Transporteur 45 und den Aufnahmepositioen 32 am Träger 31.

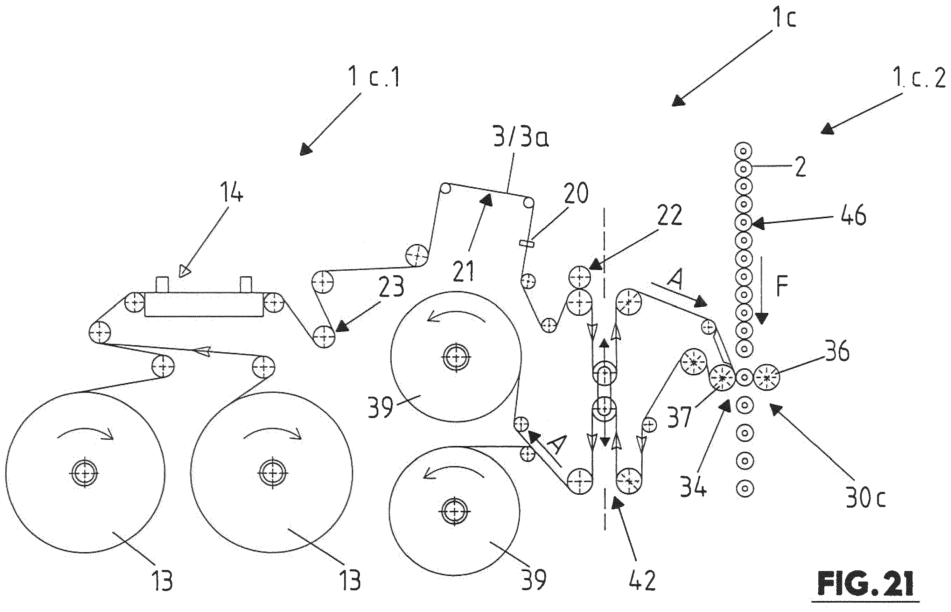

Die Figur 21 zeigt als weitere Ausführungsform eine Anlage 1c zum Aufbringen von hinterdruckten Einzellaminaten 5.1 auf die rotationssymmetrischer bzw. zylindrischer Außenfläche von Produkten 2, z.B. in Form von Packmitteln oder Stiften. Die Anlage 1c besteht wiederum aus den beiden Anlagenteilen 1c.1 und 1c.2, wobei das Anlagenteil 1c.1 dem Anlagenteil 1a.1 entspricht und sich das Anlagenteil 1c.2 von dem Anlagenteil 1a.2 im Wesentlichen nur durch die etwas unterschiedliche Ausgestaltung der Laminiereinheit 30c unterscheidet. Anstelle eines getaktet umlaufenden Trägers 31 weist die Laminiereinheit 30c einen Lineartransporteur 46 auf, mit dem die Produkte 2 getaktet an der Übergabe- und Wickelposition 34 der Laminiereinheit 30c vorbei bewegt werden, wobei in jeder Stillstandsphase der getakteten Bewegung die Übergabe und das vollständige oder nahezu vollständige Anrollen eines Einzellaminats 5.1 an ein Produkt 2 erfolgen. Die Übergabe- und Wickelposition 34 weist wiederum die Anpress-und Stützwalze 36 sowie die Anpress- und Laminierwalze 37 auf. Das Laminieren der Produkte erfolgt in gleicher Weise, wie dies für die Anlage 1 bzw. 1a beschrieben wurde.

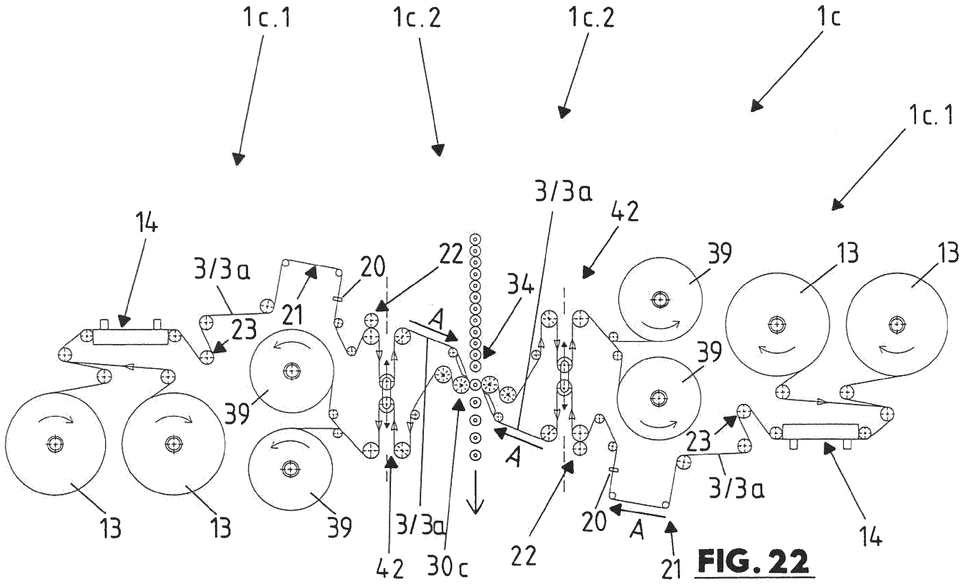

Die Figur 22 zeigt eine Anlage 1d, bei der die beiden Anlagenteile 1d.1 und 1d.2 jeweils zweifach vorgesehen sind, wobei die Anlagenteile 1d.1 wiederum dem Anlagenteil 1a.1 entsprechen. Die beiden Anlagenteile 1d.2 bilden eine gemeinsame Laminateinheit 30d. Mit der Übergabe- und Wickelposition 34, an der die Produkte 2 mittels des den Lineartransporteurs 46 getaktet vorbei bewegt werden und an der in jeder Stillstandsphase der getakteten Bewegung die Übergabe und das vollständige oder nahezu vollständige Anrollen der Einzellaminats 5.1 an die Produkte 2 erfolgen. An der Übergabe- und Wickelposition sind sich bezogen auf das dort angeordnete Produkte 2 diametral gegenüberliegende zwei Anpress- und Laminierwalzen 37 vorgesehen, die beide gegen das an der Übergabe- und Wickelposition 34 befindliche Produkt 2 angepresst anliegen. Mit jeder Anpress- und Laminierwalze erfolgt die Übergabe und Übertragung eines Einzellaminats 5.1 in der vorbeschriebenen Weise an das Produkt, beispielsweise auf eine Vorderseite und eine Rückseite dieses Produktes, z.B. gleichzeitig oder zeitlich versetzt oder zeitlich überlappend. Um dies zu ermöglichen, sind die Anlagenteile 1d.1 und 1d.2 auf der einen Seite des Lineartransporteurs 46 gegenüber den entsprechenden Anlagenteilen auf der anderen Seite des Lineartransporteurs 46 um eine Achse senkrecht zur Transportrichtung des Lineartransporteurs 46 um 180° gewendet vorgesehen.
Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird.

So wurde vorstehend davon ausgegangen, dass das Laminatmaterial 3 und 3a zwei Randstreifen 7 mit den Markierungen 8 aufweist. Selbstverständlich sind auch Ausführungen möglich, bei denen das Laminatmaterial lediglich einen Randstreifen 7 mit den Markierungen 8 besitzt und/oder entsprechende, zumindest den Vorschub des Laminatmaterials sowie den Antrieb der Stanzeinheit und der Laminiereinheit 30 bzw. der dortigen Walzen 36 und 37 steuernde, beispielsweise optisch abtastbare Markierungen auf dem jeweiligen Einzellaminat 5.1 und/oder auf den Zwischenlaminaten 43 vorhanden sind. Weiterhin besteht die Möglichkeit, dass bei dem Laminatmaterial auf die Randstreifen 7 völlig verzichtet ist, und zwar dann, wenn die Markierungen 8 an Randstreifen zur Steuerung der Laminiereinheit 30 und des Vorschubes des Laminatmaterials nicht erforderlich sind, sondern andere insbesondere auch optisch erfassbare Merkmale des Laminatmaterials selbst hierfür verwendet werden.

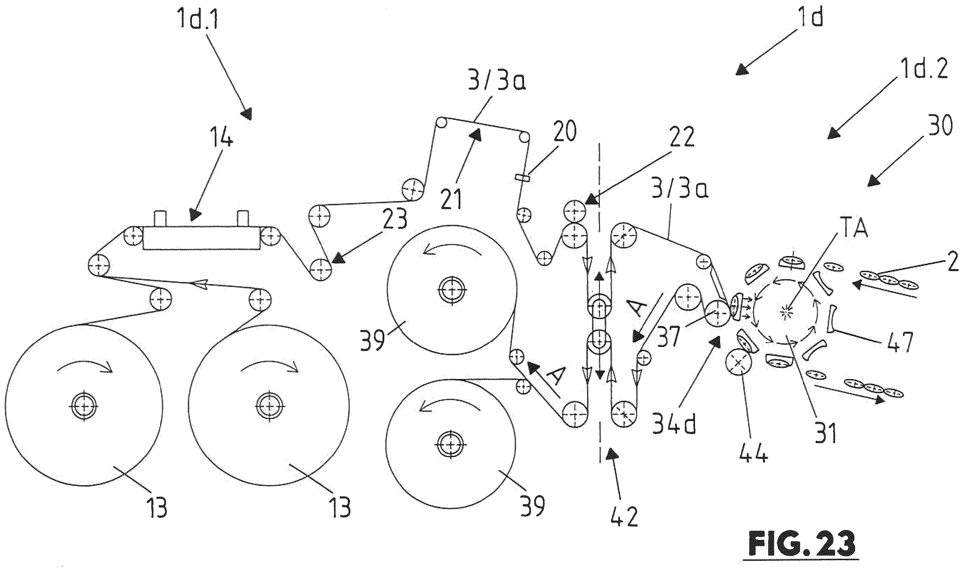

Die Figur 23 zeigt in einer Darstellung ähnlich Figur 18 eine Anlage 1d zum Aufbringen von Einzellaminaten 5.1 auf Produkte 2, beispielsweise auf Dosen oder Flaschen mit ovalem Querschnitt. Die Anlage 1d umfasst wiederum das dem Anlagenteil 1a.1 entsprechende Anlagenteil 1d.1 sowie das dem Anlagenteil 1a.2 entsprechende und das Anlagenteil 1d.2, dessen Laminiereinheit 30 an die ovalen Produkte 2 angepasst ist und hierfür an dem um die horizontale Achse umlaufend antreibbaren Träger 31 eine Vielzahl von Aufnahmen 47 zur Aufnahme jeweils eines Produkts 2 aufweist. Die über einen äußeren Transporteur zugeführten Produkte 2 gelangen jeweils einzeln an eine Aufnahme 47 und werden mit dem schrittweise angetriebenen Träger 31 an die Übergabe- und Laminierposition 34d bewegt. Ist jeweils ein Produkt 2 an diese Position gelangt, so erfolgt ein Zustellen der Walze 37, sodass der Anfangsbereich eines Einzellaminats 5.1 an das Produkt angedrückt wird. Im Anschluss daran bewegen sich die Walze 37 und die mit dem Einzellaminat 5.1 zu versehene Fläche des Produktes 2 synchron, und zwar durch eine entsprechende Schwenkbewegung sowie ggs. auch axiale Bewegung der Aufnahme 47. Auch hierbei ist es zweckmäßig, dass die Walze 37 mit dem Träger 31 und den Aufnahmen 47 zunächst eine kurze Rückbewegung und anschließend eine Vorwärtsbewegung ausführt, wie dies z.B. im Zusammenhang mit den Figuren 7 und 8 beschrieben wurde. Kurz bevor das rückwärtige Ende des jeweiligen Einzellaminats 5.1 gegen das Produkt 2 zur Anlage kommt, wird die Walze 37 vom Produkt wegbewegt, sodass der Rest des Einzellaminats von dem Trägermaterial 4 durch die weitere Dreh- oder Schwenkbewegung der Aufnahme 47 vom Laminatmaterial 3 bzw. 3a bzw. von dessen Trägermaterial 4 abgezogen wird. Im Anschluss daran wird durch Vorschubbewegung des Laminatmaterials 3 bzw. 3a das nächste Einzellaminat 5.1 an die Übergabeposition 34 bewegt, Gleichzeitig wird durch die getaktete Drehbewegung des Trägers 31 auch die nächste Aufnahme 47 mit dem in dieser angeordneten Produkt 2 an die Übergabeposition 34d bewegt. Der noch "lose Rest" jedes Einzellaminats wird mit der auf die Übergabeposition 34d folgenden Anpresswalze 44 an das Produkt angepresst. Die mit den Einzellaminaten 5.1 ausgestatteten Produkte 2 werden über einen äußeren Transporteur weggeführt.

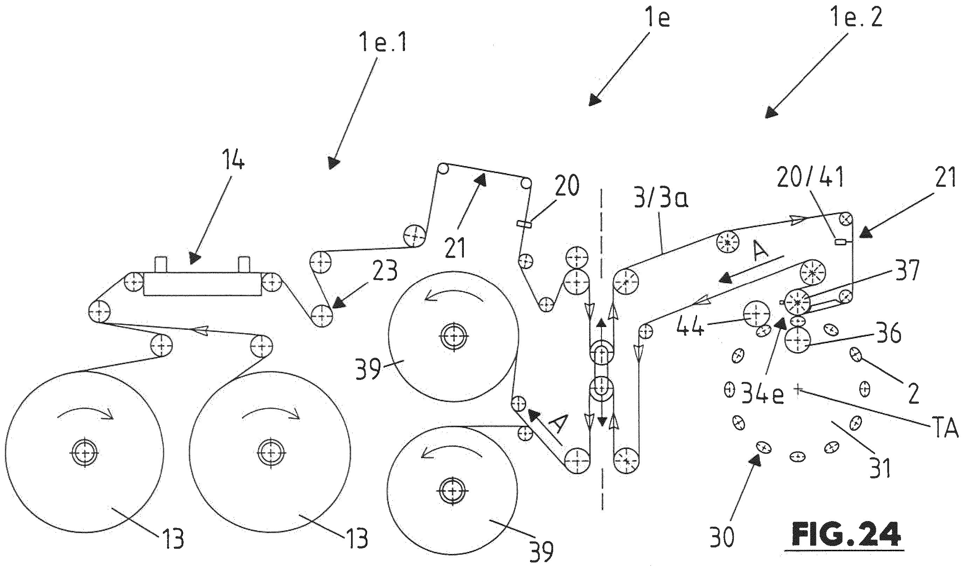

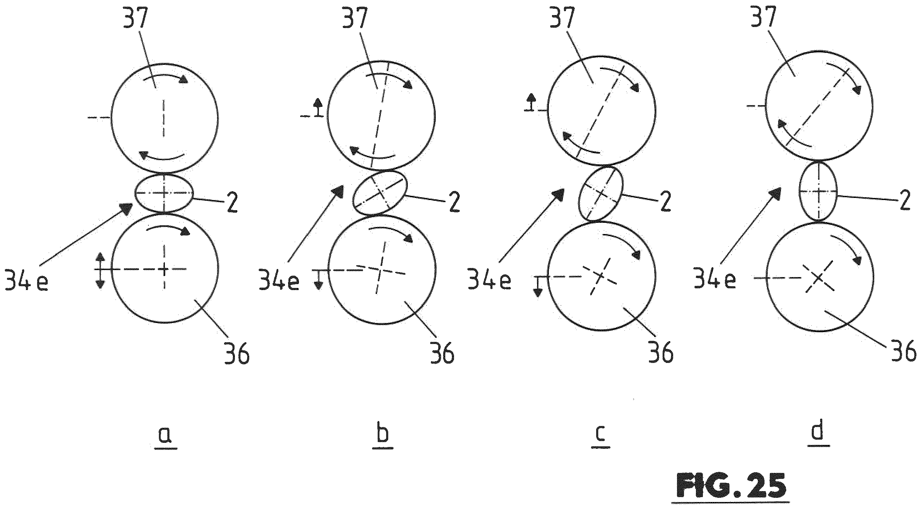

Die Figuren 24 und 25 zeigen als weitere Ausführungsform eine Anlage 1e, die zur Ausstattung (z.B. Rundum-Laminierung) von im Querschnitt ovalen Produkten 2 (z.B. Alu-Tuben) mit den Einzellaminaten 5.1 dient und die wiederum die beiden Anlageteile den Anlageteilen 1a.1 und 1a.2 entsprechenden Anlagenteile 1e.1 und 1e.2 aufweist und sich von der Anlage 1a lediglich durch die an die ovalen Produkte 2 angepasste Ausbildung der Laminiereinheit 30 unterscheidet. Letztere weist an dem Träger 31 die von Dornen 32 gebildeten Aufnahmen für die Produkte 2 auf. Die Dornen 32 sind mit ihren Außenquerschnitt an den Innenquerschnitt der Produkte 2 angepasst und um ihre Achsen drehbar. Das Aufbringen der Einzellaminate 5.1 auf die Mantelfläche der Produkte 2 erfolgt an der Übergabeposition 34e in gleicher Weise, wie dies vorstehend im Zusammenhang mit den Anlagen 1 und 1a beschrieben wurde, und zwar zwischen den beiden Walzen 36 und 37 durch Auf- bzw. Anwickeln des jeweiligen Einzellaminats 5.1 an das Produkt 2. Die Walzen 36 und 37 drehen hierbei nicht nur um ihre Walzenachse, sondern werden zugleich auch radial bewegt, und zwar unter Anpassung des Abstandes dieser Walzen an den Querschnitt, mit dem das ovale mit dem Dorn 32 um die Dornachse drehende Produkte 2 zwischen den beiden Walzen 36 und 37 jeweils wirkt.

Nach dem Verlassen der Übergabeposition 34e gelangt jedes auf einem Dorn 32 angeordnete und mit dem Einzellaminat 5.1 versehene Produkt 2 mit dem schrittweise bzw. getaktet angetriebenen Träger 31 in dem Bereich einer Anpresswalze 44, an der zumindest auch das nacheilende bzw. hintere Ende des jeweiligen Einzellaminats an das Produkt 2 angepresst wird.

Die Figur 25 zeigt in den Positionen a - d nochmals unterschiedliche Phasen beim Übergeben sowie beim An- oder Aufwickeln der Einzellaminate 5.1 an das an der Übergabeposition 34e angeordnete Produkt 2. Insbesondere zeigt die Figur 25 auch die Drehbewegung der beiden Walzen 36 und 37 sowie die gesteuerte, gegenläufige radiale Bewegung dieser Walzen in einer Achsrichtung radial zur Achse des Trägers 31 zur Anpassung des Walzenabstandes an den jeweiligen Querschnitt, den das Produkt 2 zwischen den beiden Walzen 36 und 37 ausbildet.

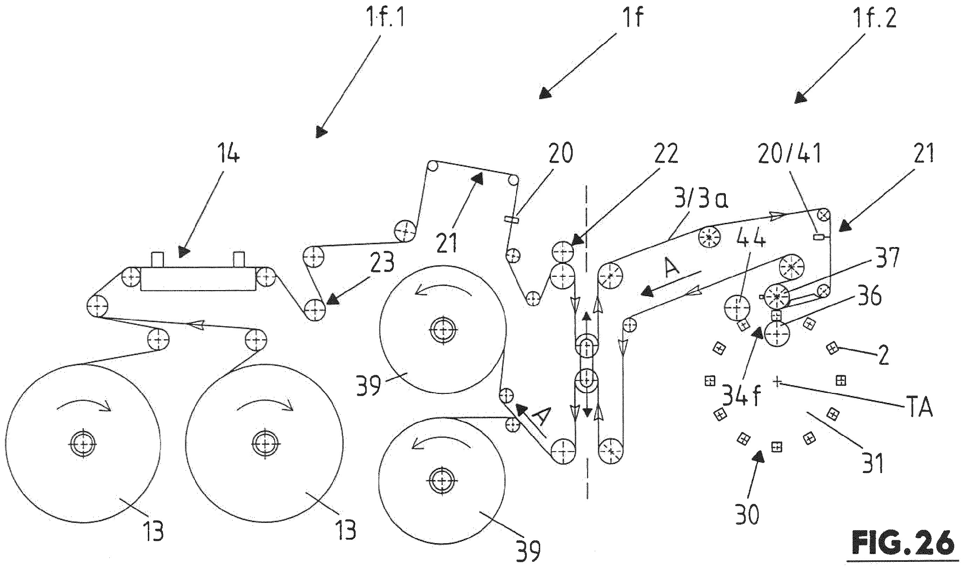

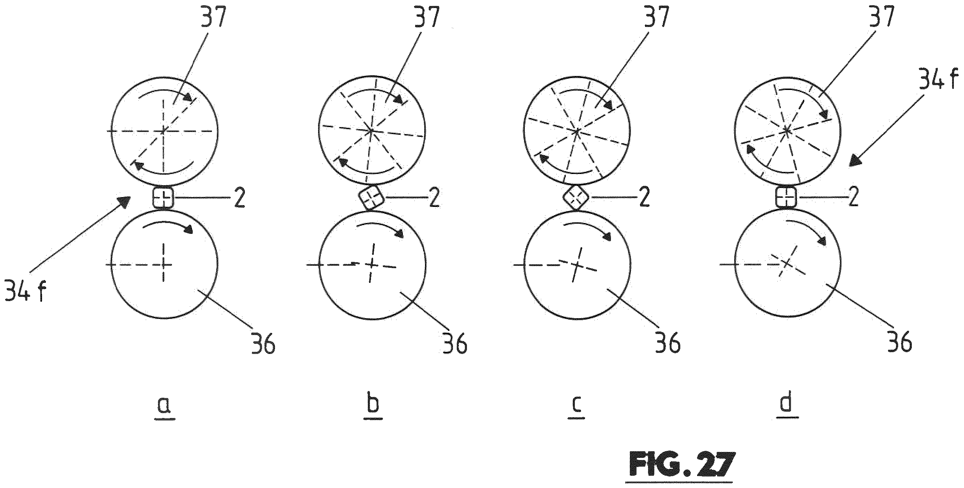

Die Figur 26 zeigt eine Anlage 1f, die wiederum das dem Anlagenteil 1a.1 entsprechende Anlagenteil 1f.1 zum Bereitstellen des Laminatmaterials 3 bzw. 3a sowie das dem Anlagenteil 1a.2 entsprechenden Anlagenteil 1f.2 mit der Laminiereinheit 30 aufweist. Die Laminiereinheit 30 ist wiederum zum Aufbringen der Einzellaminate 5.1 auf Produkte 2 (z.B. Dosen) ausgebildet, die einen von der Kreisform abweichenden Querschnitt aufweisen, und zwar bei der in den Figuren 26 und 27 wiedergegebenen Ausführungsform einen quadratischen Querschnitt. Die Laminiereinheit 30 besitzt den Träger 31, an welchem Produktaufnahmen bildende Dorne 32 vorgesehen sind, die an den Innenquerschnitt der Produkte 2 angepasst und um ihre Dornachse drehbar sind. Das Aufbringen bzw. Anwickeln der Einzellaminate 5.1 auf das jeweils an der Übergabeposition 34f befindliche Produkt 2 erfolgt in ähnlicher Weise, wie dies vorstehend für die Anlage 1e beschrieben wurde. Das jeweilige Einzellaminat 5.1 wird bei zugestellten Walzen 36 und 37 an eine Umfangsseite des Produktes übergeben. Bei rotierenden Walzen 36 und 37 und rotierendem Produkt 2 wird das Einzellaminat 5.1 unter zunehmenden Abziehen von dem Trägermaterial 4 auf das Produkt 2 durch Anwickeln übertragen, wobei die beiden Walzen 36 und 37 wiederum zusätzlich zu ihrer Drehbewegung auch gesteuert gegenläufig radial bewegbar sind, und zwar zur Anpassung des Walzenabstandes an den Querschnitt, den das Produkt 2 zwischen den Walzen 36 und 37 jeweils ausbildet. Die Positionen a - d zeigen im Detail verschiedenen Phase der Übergabe und des Anwickeln des jeweiligen Einzellaminats 5.1 an das Produkt 2. Nach dem Verlassen der Übergabeposition 34f gelangt das jeweilige Produkt 2 mit dem schrittweise weiterbewegten Träger 31 wiederum an die Anpresswalze 44, mit der zumindest das nacheilende Ende jedes Einzellaminats gegen das Produkt 2 angedrückt wird.

Vorstehend wurde davon ausgegangen, dass die Produkte 2 einen quadratischen Querschnitt aufweisen. Selbstverständlich können in gleicher oder ähnlicher Weise auch Produkte mit einem anderen, von der Kreisform abweichenden Querschnitt, beispielsweise mit einem dreieckförmigen, rechteckförmigen oder anderen polygonalen Querschnitt mit den Einzellaminaten 5.1 versehen werden.

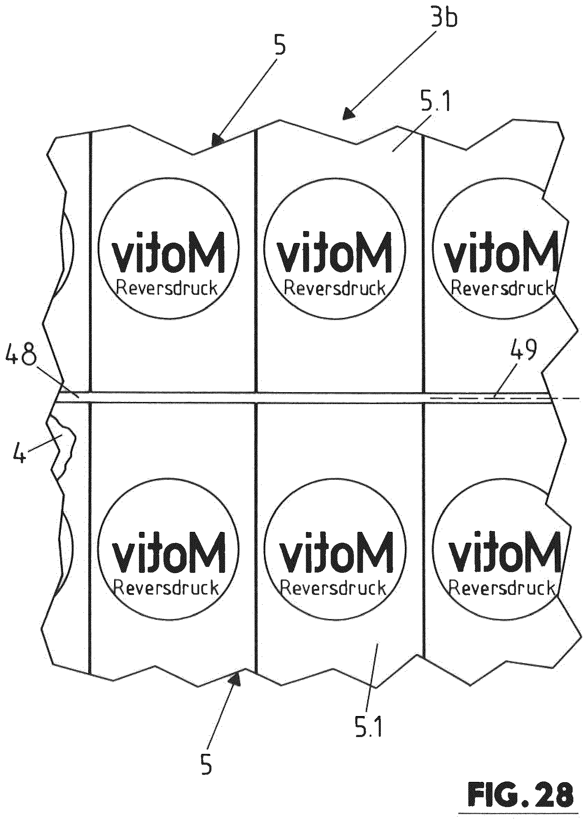

Die Figur 28 zeigt in einer Darstellung ähnlich Figur 2 eine Teillänge eines Laminatmaterials 3b, welches mehrbahnig ausgebildet ist, d.h. in Laminatmateriallängsrichtung zwei Reihen oder Folgen von Einzellaminaten 5.1 aufweist. Dieses Laminatmaterial besteht aus einem entsprechend breiten bahnförmigen Trägermaterial 4, auf dem die die Einzellaminate 5.1 bildende Folie 5 mit dem Trennlack oder Schälkleber gehalten ist. Aus diesem mehrbahnigen Laminatmaterial 3b werden für das Ausstatten der Produkte 2 bevorzugt mehrere einbahnige Laminatmaterialien gebildet, und zwar durch Ausstanzen und Ausziehen eines Folienstreifens 48 zwischen den Reihen der Einzellaminate 5.1 und durch anschließendes Trennen des Trägermaterials 4 entlang einer Trennlinie 49 zwischen den Reihen der Einzellaminate 5.1.

Die so erhaltenen einreihigen Laminatmaterialien werden dann beispielsweise zum Ausstatten von Produkten 2 parallel, bevorzugt in zwei Laminiereinheiten verarbeitet oder aber zu jeweils einem Laminatmaterialvorrat verarbeitet und aufgewickelt, von dem dann zu einem späteren Zeitpunkt das jeweils einbahnige Laminatmaterial beim Ausstatten der Produkte 2 mit den Einzellaminaten 5.1 abgezogen

Vorstehend wurde die Erfindung am Beispiel der Laminierung von Packmitteln 2, beispielsweise Tuben beschrieben. Die Erfindung eignet sich aber auch zum Laminieren von anderen Produkten, insbesondere von solchen mit kreiszylinderförmiger Mantelfläche, beispielsweise Stiften.

### Bezugszeichenliste

- 1, 1a- 1f: Anlage
- 1.1, 1a.1 - 1f.1: Anlagenteil
- 1.2, 1a.2 - 1f.2: Anlagenteil
- 2: Produkte, z.B. Packmittel oder Stift
- 3, 3a, 3b: Laminatmaterial
- 3.1: Ausgangsmaterial
- 4: bahnförmiges Trägermaterial
- 5: Folie
- 5.1: Einzellaminat
- 5.1.1, 5.1.2: Ende des Einzellaminats
- 5.2: Aufdruck
- 6: Schicht aus Trennlack oder Schälkleber
- 7: Randstreifen
- 8: Markierung
- 9, 10: Trennlinie
- 11: Kleberauftrag
- 12: Folienstreifen
- 12.1: kleberfreier streifenförmiger Bereich
- 13: Vorratsspule für Ausgangsmaterial 3.1
- 14: Spleißvorrichtung
- 15: Station für Kleberauftrag
- 16: Station zum Trocken und Kühlen
- 17: Stanzeinheit
- 18: Station zum Abziehen der Folienstreifen 11
- 19: Wickelkörper
- 20: Sensor, auch Kantensensoren für die Kantensteuerung
- 21: Kantensteuerung
- 22: Mittel für den Bahntransport
- 23: Einrichtung zur Regulierung der Bahnspannung
- 30: Laminiereinheit
- 31: Träger
- 32: Dorn
- 33: Aufgabeposition
- 34, 34b - 34f: Übergabe- und Wickelposition
- 35: Abnahmeposition
- 36: Anpress- und Stützwalze
- 37: Anpress- und Laminierwalze
- 38: Überlaminierung
- 39: Wicklung oder aufgewickeltes Trägermaterial 4
- 40: Heizeinrichtung bzw. Heizplatte
- 41: Sensor
- 42: Vorschubausgleichseinheit
- 43: Zwischenlaminat
- 44: Anpresswalze
- 45: Transporteur
- 46: Lineartransporteur
- 47: Aufnahme
- 48: Folienstreifen
- 49: Trennlinie

- A: Transportrichtung des Ausgangsmaterials 3.1 und des Laminatmaterials 3, 3a
- B: Drehrichtung des Trägers 31
- C, C': Drehrichtung der Anpress- und Stützwalze 36
- D, D': Drehrichtung der Anpress- und Laminierwalze 37
- E: Ebene
- H: radialer Hub der Walzen 36 und 37
- F: Transportrichtung
- LA, STA: Achse
- TA: Achse

## Patentansprüche

1. Verfahren zum Ausstatten von Produkten, beispielsweise Packmitteln (2) durch Aufbringen von Einzellaminaten (5.1) aus einer dünnen Folie (5) auf die Außenfläche von Produkten (2) unter Verwendung eines das jeweilige Einzellaminat (5.1) am Produkt (2) fixierenden Kleberauftrags (11), wobei die mit einem Trennlack oder Schälkleber an einem bahnförmigen Trägermaterial (4) eines Laminatmaterials (3, 3a) gehaltenen Einzellaminate (5.1) jeweils durch Andrücken an das Produkt (2) übergeben und unter zunehmendem Abziehen von dem Trägermaterial (4) über den Kleberauftrag (11) mit dem Produkt (2) vorzugsweise durch Anrollen verbunden werden, wobei zur Bereitstellung des Laminatmaterials (3, 3a) aus der auf dem Trägermaterial (4) mit dem Trennlack oder Schälkleber gehaltenen Folie (5) durch Stanzen und/oder Schneiden die Einzellaminate (5.1) gebildet und anschließend wenigstens ein die Einzellaminate (5.1) nicht bildender, den Einzellaminaten (5.1) benachbarter, von diesen aber durch beim Stanzen oder Schneiden erzeugte Trennlinien (10) getrennter Folienrest (12) von dem Trägermaterial (4) abgezogen wird, wobei das Stanzen oder Schneiden der Folie (5) derart erfolgt, dass in Längsrichtung des Trägermaterials (4) aufeinander folgende Einzellaminate (5.1) über eine einzige quer zu dieser Längsrichtung verlaufende erste Trennlinie (9) unmittelbar aneinander anschließen, wobei die den Längsseiten des Trägermaterials (4) zugewandten Ränder der Einzellaminate (5.1) jeweils von einer sich in Längsrichtung des Trägermaterials erstreckenden, durchgehenden zweiten Trennlinie (10) gebildet sind, und wobei als Folienrest im Bereich jeder Längsseite des Trägermaterials (4) ein durch die zweite Trennlinie (10) von den Einzellaminaten (5.1) getrennter Folienstreifen (12) abgezogen wird,
**dadurch gekennzeichnet, dass**
der Kleberauftrag (11) auf die dem Trägermaterial (4) abgewandte Seite der Folie (5) vor dem Erzeugen der Einzellaminate (5.1) durch Stanzen oder Schneiden unter Verwendung eines Schmelz- oder Heißklebers erfolgt, wobei die Folie (5) aus Kunststoff besteht und eine Dicke im Bereich zwischen 2 µm und 20 µm aufweist.

2. Verfahren nach Anspruch 1, **dadurch gekennzeichnet, dass** das Stanzen oder Schneiden
der Folie (5) derart erfolgt, dass die auf dem Trägermaterial (4) angeordneten Einzellaminate (5.1) Gruppen bestehend aus jeweils wenigstens zwei an einer ersten Trennlinie (9) unmittelbar aneinander anschließenden Einzellaminaten (5.1) bilden, vorzugsweise von mehr als zwei jeweils an ersten Trennlinien unmittelbar aneinander anschließenden Einzellaminaten (5.1), und dass zwischen den Gruppen Zwischenlaminate (43) vorgesehen sind, die jeweils durch die zweiten Trennlinien (10) und durch zwei in Längsrichtung des Trägermaterials (4) voneinander beabstandeten erste Trennlinien (9) gebildet sind.

3. Verfahren nach einem der vorhergehenden Ansprüche, **dadurch gekennzeichnet, dass** bei
der Übergabe eines Einzellaminats (5.1) an ein Produkt (2) dieses Einzellaminat (5.1) zunächst mit einem Bereich, der entgegen einer Transportrichtung (A) des Laminatmaterials (3, 3a) von einem vorauseilenden Ende (5.1.1) des Einzellaminats (5.1) beabstandet ist, gegen das Produkt (2) angedrückt wird, dass anschließend durch eine Bewegung entgegen der Transportrichtung (A) auch das vorauseilende Ende (5.1.1) des Einzellaminats (5.1) gegen das Produkt (2) angepresst wird, und dass anschließend unter Bewegen des Laminatmaterials (3, 3a) in Förderrichtung (A) das Aufbringen des Einzellaminats (5.1) auf das Produkt (2) unter Abziehen dieses Laminats von dem Trägermaterial (4) erfolgt.

4. Verfahren nach einem der vorhergehenden Ansprüche, **dadurch gekennzeichnet, dass** das Aufbringen des jeweiligen Einzellaminats (5.1) auf das Produkt (2) derart erfolgt, dass ein hierbei nacheilendes Ende (5.1.2) des Einzellaminats (5.1) das bereits auf dem Produkt (2) fixierte vorauseilende Ende des Einzellaminats (5.1) zur Ausbildung einer Überlaminierung (38) überlappt.

5. Verfahren nach einem der vorhergehenden Ansprüche, **dadurch gekennzeichnet, dass** das Aufbringen der Einzellaminate (5) auf das Produkt (2) mit Hilfe einer Anpress- und Laminierwalze (37) erfolgt, über die das Laminatmaterial (3, 3a) und das Trägermaterial (4) geführt ist und die durch einen gesteuerten Antrieb angetrieben ist, wobei die Anpress- und Laminierwalze (37) das Einzellaminat (5.1) während der Übergabe und während des Aufbringens oder Anrollens an ein Produkt (2) gegen das Produkt (2) andrückt, wobei die Anpress- und Laminierwalze (37) vorzugsweise radial zu ihrer Achse durch einen Stellantrieb zwischen einer Ausgangsposition, in der sie und das über die Anpress- und Laminierwalze (37) geführte Laminatmaterial (3, 3a) von dem Produkt (2) beabstandet sind, und einer Zustellposition bewegbar ist, in der das Laminatmaterial (3, 3a) über die Anpress- und Laminierwalze (37) angepresst gegen das an der Übergabe-und Anrollposition (34) befindliche Produkt (2) anliegt, und/oder wobei die Anpress- und Laminierwalze (37) vorzugsweise in ihre Ausgangsposition zurückbewegt wird, bevor das nacheilende Ende des Einzellaminats (5.1) die Anpress- und Laminierwalze (37) passiert.

6. Verfahren nach einem der vorhergehenden Ansprüche, **dadurch gekennzeichnet, dass** bei Verarbeitung von Produkten (2) mit von der Kreisform abweichendem Querschnitt die Anpress- und Laminierwalze (37) und eine Anpresswalze (36), soweit vorhanden, auch radial zu ihren Achsen während des Laminierens bewegt werden.

7. Verfahren nach einem der vorhergehenden Ansprüche, **dadurch gekennzeichnet, dass** die Folie (5) aus einem transparenten Kunststoff besteht und/oder eine Dicke im Bereich zwischen 2 µm und 5 µm aufweist.

8. Verfahren nach einem der vorhergehenden Ansprüche, **dadurch gekennzeichnet, dass** die Folie (5) zumindest im Bereich der Einzellaminate (5.1) an ihrer dem Trägermaterial (4) abgewandten Oberflächenseite bedruckt wird.

9. Verfahren nach einem der vorhergehenden Ansprüche, **dadurch gekennzeichnet, dass** entlang wenigstens einer Längsseite des Trägermaterials (2) wenigstens zwei voneinander beabstandete zweite Trennlinien (10) durch Stanzen und/oder Schneiden in die Folie (5) eingebracht werden, und dass der zwischen diesen beiden Trennlinien gebildete Folienstreifen (12) als Folienrest abgezogen wird.

10. Verfahren nach einem der vorhergehenden Ansprüche, **dadurch gekennzeichnet, dass** das gesamte Folienmaterial seitlich von den Einzellaminaten (5.1) als Folienrest abgezogen wird, und/oder dass das mit Markierungen (8) versehene Folienmaterial seitlich von den Einzellaminaten (5.1) erst unmittelbar vor dem Laminieren als Folienrest abgezogen wird.

11. Verfahren nach einem der Ansprüche 2 bis 10, **dadurch gekennzeichnet, dass** die Zwischenlaminate (43) auf dem Trägermaterial (4) verbleiben und mit diesem entsorgt werden, und/oder dass die Folienstreifen (12) zum Entsorgen zu Kreuzwickelkörper (19) aufgewickelt werden.

12. Verfahren nach einem der vorhergehenden Ansprüche, **dadurch gekennzeichnet, dass** die Produkte zumindest an ihren mit den Einzellaminaten (5.1) zu versehenen Bereichen eine runden oder kreiszylinderförmigen oder einen von der Kreisform abweichenden Querschnitt, z.B. einen ovalen oder polygonalen Querschnitt, beispielsweise einen quadratischen oder rechteckförmigen Querschnitt aufweisen.

## Claims

1. Method for the equipping of products, for example, packaging materials (2) by applying single laminates (5.1) made of a thin film (5) onto the outer surface of products (2) by using an adhesive to attach the respective laminate (5.1) to the product (2), wherein the single laminates (5.1), which are attached to a sheet-like carrier material (4) of a laminate material (3, 3a) by means of a release lacquer or a multi-layered adhesive, are transferred onto the product (2) by pressing and while cumulatively pulling them off the carrier material (4) are connected to the product (2) via the adhesive (11), preferably by rolling them on, wherein, for providing the laminate material (3, 3a) from the film (5) attached to the carrier material (4) using release lacquer or multi-layered adhesive, the single laminates (5.1) are formed by means of punching and/or cutting them and then at least one piece of scrap film (12), which does not make up the single laminates (5.1) and is adjacent to the single laminates (5.1) but separated therefrom by means of separation lines (10) created by means of punching or cutting, is pulled off the carrier material (4), wherein the punching or cutting of the film (5) is performed in such a way that single laminates (5.1) successively following each other in the longitudinal direction of the carrier material are immediately connected to one another via an individual first separation line (9) running transversely to this longitudinal direction, wherein the edges of the single laminates (5.1) facing the longitudinal sides of the carrier material (4) are respectively formed by a second continuous separation line (10) that extends into the longitudinal direction of the carrier material and wherein a film strip (12) separated from the single laminates (5.1) by a second separation line (10) is pulled off as film scrap in the area of each longitudinal side of the carrier material (4), **characterized in that**
the application of the adhesive (11) onto the side of the film (5) facing away from the carrier material (4) is carried out before creating the single laminates (5.1) by means of punching or cutting under the use of a hot-melt adhesive, wherein the film (5) is made of plastic and has a thickness ranging between 2 µm und 20 µm.

2. Method according to Claim 1, **characterized in that** the punching or cutting of the film (5) takes place in such a way that the single laminates (5.1) arranged on the carrier material (4) form groups comprising of at least two successive single laminates (5.1) immediately connected at a first separation line (9), preferably more than two single laminates (5.1) each immediately connected at first separation lines and that between the groups, intermediate laminates (43) are provided that are each formed by the second separation lines (10) and by first separation lines (9) that are separated from each other in the longitudinal direction of the carrier material (4).

3. Method according to any one of the preceding claims, **characterized in that**, when transferring a single laminate (5.1) to a product (2), this single laminate (5.1) is initially pressed against the product (2) with an area, that is separated from a preceding end (5.1.1) of the single laminate (5.1) against a direction of transport (A) of the laminate material (3, 3a), **in that** subsequently, by moving against the direction of transport (A), also the preceding end (5.1.1) of the single laminate (5.1) is pressed against the product (2) and **in that** then, by moving the laminated material (3, 3a) in the direction of transport (A), the application of the single laminate (5.1) onto the product (2) takes place by pulling off this laminate from the carrier material (4).

4. Method according to any one of the preceding claims, **characterized in that** the application of the respective single laminate (5.1) onto the product (2) takes place in such a way that a hereby lagging end (5.1.2) of the single laminate (5.1) overlaps with the end of the single preceding laminate (5.1) that is already attached to the product (2) to form an overlamination (38).

5. Method according to any one of the preceding claims, **characterized in that** the application of the single laminates (5) onto the product (2) takes place using a pressure / laminating roller (37), over which the laminate material (3, 3a) and the carrier material (4) is guided and which is powered by a controlled drive system, wherein the pressure / laminating roller (37) presses the single laminate (5.1) against the product (2) during the transfer and during the application or rolling onto a product (2), wherein the pressure / laminating roller (37) can be moved radially with respect to its axis by means of a actuator between an initial position, where it and the laminate material (3, 3a) led over the pressure / laminating roller (37) are separated from the product (2), and a feed position, where the laminate material (3, 3a), pressed by means of the pressure / laminating roller (37) abuts against the product (2) in the transfer and roller position (34) and / or wherein the pressure / laminating roller (37) is preferably moved back into its initial position before the lagging end of the single laminate (5.1) passes through the pressure / laminating roller (37).

6. Method according to any one of the preceding claims, **characterized in that**, when processing of products (2) with a cross section differing from the circular shape, the pressure / laminating roller (37) and a press roller (36), provided that these are present, are also moved in a radial direction with respect to their axes during lamination.

7. Method according to any one of the preceding claims, **characterized in that** the film (5) is made of a transparent plastic and/or has a thickness ranging between 2 µm and 5 µm.

8. Method according to any one of the preceding claims, **characterized in that** the film (5) is printed at least in the area of the single laminates (5.1) on the side of its surface facing away from the carrier material (4).

9. Method according to any one of the preceding claims, **characterized in that** along at least one longitudinal side of the carrier material (2), at least two second separation lines (10) spaced away from each other are made in the film (5) by means of punching and / or cutting and that the film strip (12) formed by both of these separation lines is pulled off as film scrap.

10. Method according to any one of the preceding claims, **characterized in that** the entire film material is pulled of the single laminates (5.1) on the side as film scrap, and/or that the film material with markings (8) is pulled off of the single laminates on the side (5.1) as scrap film only directly prior to laminating.

11. Method according to one of the Claims 2 to 10, **characterized in that** the intermediate laminates (43) remain on the carrier material (4) and are disposed of with it, and / or **in that** the film strips (12) are rolled up into cross-wound bodies (19) for disposal.

12. Method according to any one of the preceding claims, **characterized in that** the products, at least on their areas where the single laminates (5.1) are to be applied, have a round or circular-cylinder-shaped cross section or a shape that deviates from a circular form, for example, an oval or polygonal cross section, for example a square or rectangular cross section.

## Revendications

1. Procédé destiné à munir des produits, par exemple des emballages (2) par application de laminés individuels (5.1) en un film (5) mince sur la surface extérieure des produits (2) en utilisant une application d'adhésif (11) fixant le laminé individuel (5.1) concerné sur le produit (2), les laminés individuels (5.1) maintenus avec un vernis de séparation ou un adhésif pelable sur une matière de support (4) en forme de bande d'une matière laminée (3, 3a) étant transférés chaque fois par pression contre le produit (2) et sous retrait croissant de la matière de support (4), étant reliés avec le produit (2) par l'application d'adhésif (11), de préférence par aller-retour, pour la mise à disposition de la matière laminée (3, 3a), à partir du film (5) maintenu sur la matière de support (4) par le vernis de séparation ou l'adhésif pelable, les laminés individuels (5.1) étant formés par estampage et/ou par découpe et par la suite, au moins un reste de film (12) ne formant pas les laminés individuels (5.1), voisin des laminés individuels (5.1), mais séparé de ces derniers par des lignes de séparation (10) créées lors de l'estampage ou de la découpe étant retiré de la matière de support (4), l'estampage ou la découpe du film (5) s'effectuant de telle sorte que dans la direction longitudinale de la matière de support (4), des laminés individuels (5.1) successifs se raccordent directement les uns aux autres, par l'intermédiaire d'une unique première ligne de séparation (9), s'écoulant à la transversale de ladite direction longitudinale, les bords des laminés individuels (5.1) faisant face aux côtés longitudinaux de la matière de support (4) étant formés chacun par une deuxième ligne de séparation (10) continue, s'étendant dans la direction longitudinale de la matière de support et en tant que reste de film dans la zone de chaque côté longitudinal de la matière de support (4), une bande de film (12) séparée des laminés individuels (5.1) par la deuxième ligne de séparation (10) étant retirée,
**caractérisé en ce que**
l'application d'adhésif (11) sur la face du film (5) qui est opposée à la matière de support (4) s'effectue avant la création des laminés individuels (5.1) par estampage ou par découpe, en utilisant une colle fusible ou thermo-adhésive, le film (5) étant en matière plastique et présentant une épaisseur de l'ordre compris entre 2 µm et 20 µm.

2. Procédé selon la revendication 1, **caractérisé en ce que** l'estampage ou la découpe du film (5) s'effectue de telle sorte que les laminés individuels (5.1) placés sur la matière de support (4) forment des groupes composés de chaque fois au moins deux laminés individuels (5.1) se raccordant directement les uns aux autres sur une première ligne de séparation (9), de préférence de plus de deux laminés individuels (5.1) se raccordant chaque fois directement les uns aux autres sur une première ligne de séparation et **en ce qu'**entre les groupes sont prévus des laminés intermédiaires (43) qui sont formés chaque fois par les deuxièmes lignes de séparation (10) et par deux premières lignes de séparation (9) écartées les unes des autres dans la direction longitudinale de la matière de support (4).

3. Procédé selon l'une quelconque des revendications précédentes, **caractérisé en ce que** lors du transfert d'un laminé individuel (5.1) à un produit (2), ledit laminé individuel (5.1) est poussé d'abord contre le produit (2) par une zone qui à l'encontre d'une direction de transport (A) de la matière laminée (3, 3a) est écartée d'une extrémité devançante (5.1.1) du laminé individuel (5.1), **en ce qu'**ensuite, par un déplacement à l'encontre de la direction de transport (A), également l'extrémité devançante (5.1.1) du laminé individuel (5.1) est poussée contre le produit (2) et **en ce que** par la suite, par déplacement de la matière laminée (3, 3a) dans la direction de convoyage (A), l'application du laminé individuel (5.1) sur le produit (2) s'effectue en retirant ledit laminé de la matière de support (4).

4. Procédé selon l'une quelconque des revendications précédentes, **caractérisé en ce que** l'application du laminé individuel (5.1) respectif sur le produit (2) s'effectue de telle sorte qu'une extrémité succédante (5.1.2) du laminé individuel (5.1) chevauche l'extrémité devançante déjà fixée sur le produit (2) du laminé individuel (5.1), pour former une surlamination (38).

5. Procédé selon l'une quelconque des revendications précédentes, **caractérisé en ce que** l'application des laminés individuels (5) sur le produit (2) s'effectue à l'aide d'un cylindre de pression et de laminage (37), par l'intermédiaire duquel la matière laminée (3, 3a) et la matière de support (4) est guidée et qui est entraîné par un entraînement commandé, le cylindre de pression et de laminage (37) pressant le laminé individuel (5.1) contre le produit (2) pendant le transfert et pendant l'application ou l'aller et retour sur un produit (2), le cylindre de pression et de laminage (37) étant déplaçable par un servomoteur, de préférence en direction radiale par rapport à son axe entre une position initiale, dans laquelle lui-même et la matière laminée (3, 3a) guidée par l'intermédiaire du cylindre de pression et de laminage (37) sont écartés du produit (2) et une position d'approche, dans laquelle la matière laminée (3, 3a) pressée par l'intermédiaire du cylindre de pression et de laminage (37) est adjacente au produit (2) qui se trouve dans une position de transfert et d'aller et retour (34) et/ou le cylindre de pression et de laminage (37) étant ramené de préférence dans sa position initiale, avant que l'extrémité succcédante du laminé individuel (5.1) passe le cylindre de pression et de laminage (37).

6. Procédé selon l'une quelconque des revendications précédentes, **caractérisé en ce que** lors du traitement de produits (2) présentant une section transversale différente de la forme circulaire, le cylindre de pression et de laminage (37) et un cylindre de pression (36), s'il est présent sont également déplacés en direction radiale par rapport à leurs axes, pendant le laminage.

7. Procédé selon l'une quelconque des revendications précédentes, **caractérisé en ce que** le film (5) est composé d'une matière plastique transparente et/ou présente une épaisseur de l'ordre compris entre 2 µm et 5 µm.

8. Procédé selon l'une quelconque des revendications précédentes, **caractérisé en ce qu'**au moins dans la zone des laminés individuels (5.1), on imprime le film (5) au moins sur sa face superficielle opposée à la matière de support (4).

9. Procédé selon l'une quelconque des revendications précédentes, **caractérisé en ce que** le long d'au moins un côté longitudinal de la matière de support (2), on ménage dans le film (5) au moins deux deuxièmes lignes de séparation (10) écartées l'une de l'autre par estampage et/ou découpe et **en ce qu'**on retire la bande de film (12) formée entre lesdites deux lignes de séparation en tant que reste de film.

10. Procédé selon l'une quelconque des revendications précédentes, **caractérisé en ce qu'**on retire l'ensemble de la matière de film latéralement des laminés individuels (5.1) en tant que reste de film et/ou **en ce qu'**on ne retire la matière de film munie de marquages (8) latéralement des laminés individuels (5.1) seulement immédiatement avant le laminage en tant que reste de film.

11. Procédé selon l'une quelconque des revendications 2 à 10, **caractérisé en ce que** les laminés intermédiaires (43) restent sur la matière de support (4) et **en ce qu'**on les évacue avec ce dernier et/ou **en ce que** pour l'évacuation, on enroule la bande de film (12) en des corps de bobines croisées (19).

12. Procédé selon l'une quelconque des revendications précédentes, **caractérisé en ce qu'**au moins sur leurs zones qui doivent être munies des laminés individuels (5.1), les produits présentent une section transversale ronde ou en forme de cylindre circulaire ou différente de la forme circulaire, par ex. une section transversale ovale ou polygonale, par exemple une section transversale quadratique et ou rectangulaire.
